# EUROPÄISCHE PATENTSCHRIFT

(11) **EP 1 923 194 B1**
(45) Veröffentlichungstag und Bekanntmachung des Hinweises auf die Patenterteilung: **15.05.2013**
(21) Anmeldenummer: 07021993.6
(22) Anmeldetag: 13.11.2007
(51) Int. Cl.: B29C 44/04, B25G 1/00, B25G 1/01, B25G 1/10, B29C 45/16

(54) **Verfahren zur Herstellung eines Griffes**
Method for manufacturing a handle
Procédé de fabrication d'un manche

(30) Priorität: 14.11.2006 DE 102006053891; 22.12.2006 DE 102006061068
(43) Veröffentlichungstag der Anmeldung: 21.05.2008
(73) Patentinhaber: Felo-Werkzeugfabrik Holland-Letz GmbH, 35279 Neustadt (DE)
(72) Erfinder: Holland-Letz, Horst, 35279 Neustadt (DE); Holland-Letz, Martin, 35279 Neustadt (DE)
(74) Vertreter: Rehberg Hüppe + Partner

(56) Entgegenhaltungen:
- ES-A1- 2 254 040
- US-A1- 2003 172 498

## Beschreibung

### TECHNISCHES GEBIET DER ERFINDUNG

Die Erfindung betrifft ein Verfahren zur Herstellung eines Griffes für ein Werkzeug, mit dem ein Torsionsmoment übertragen werden soll. Beispielsweise betrifft die Erfindung ein Verfahren zur Herstellung eines Griffes für einen Schraubendreher.

### STAND DER TECHNIK

Gestaltungs- und Bewertungskriterien für Griffe für Werkzeuge sind insbesondere
- die Herstellungskosten des Griffes,
- das Gewicht des Griffes,
- das Anpassungsvermögen des Griffes an eine Hand und u. U. unterschiedliche Handgrößen und Kräfte unterschiedlicher Benutzer des Griffes und/oder
- das Übertragungsvermögen für Kräfte und Momente, insbesondere Torsionsmomente für ein ein Torsionsmoment übertragendes Werkzeug wie ein Schraubendreher.

Aus dem Stand der Technik ist eine Vielzahl von Ausgestaltungsformen für Griffe für Werkzeuge und für deren Herstellungsverfahren bekannt:

### Griffe insbesondere für Schraubendreher

US-PS 2,871,899 betrifft eine erste Weiterentwicklung eines Griffs für ein Werkzeug wie einen Schraubendreher aus Hartkunststoff mit dem Ziel einer Verbesserung der Haptik des Griffes. Demgemäß wird auf einen Griffkern ein vorgefertigter Griffmantel aus weichem Kunststoff aufgezogen. Griffkern und Griffmantel sind zur Übertragung eines Torsionsmoments in Umfangsrichtung formschlüssig über Profilierungen miteinander verbunden. Der Einsatz des weichen Kunststoffs verbessert die Griffigkeit des Griffs. Bei einer praktischen Erprobung des bekannten Griffs hat sich jedoch gezeigt, dass der weiche Griffmantel bei schweren Beanspruchungen von dem harten Griffkern abhebt und Falten bilden kann. Dieses "Walken" genannte Abheben des Griffmantels von dem Griffkern führt insbesondere bei Dauerbenutzung des bekannten Griffs zu einer schmerzhaften Blasenbildung im Bereich der Handfläche des Benutzers und zu einer Entzündungen verursachenden überhöhten Belastung der Handknochen.

Zur Vermeidung der vorgenannten Nachteile ist im Folgenden vorgeschlagen worden, den Griffkern stoffschlüssig mit dem Griffmantel zu verbinden, wobei der weiche Kunststoff
- hierbei lediglich in Umfangsrichtung verteilte Teilbereiche des Griffmantels bildet oder
- in Umfangsrichtung geschlossen den Griffkern umgibt,
vgl. insbesondere DE 92 02 550 U1, DE 43 04 965 A1, DE 295 15 833 U1, DE 195 39 200 A1, DE 295 17 276 U1, DE 299 00 746 U1, DE 299 04 082 U1.

Bei derartigen Griffen aus zwei Kunststoff-Komponenten ist in einem Griffkern aus Hartkunststoff, dem ersten Griffbereich, das Werkzeug verankert. Ein derartiger Griffkern wird anschließend mit einem Griffmantel aus weichem Kunststoff umspritzt, vgl. bspw. EP 0 627 974 B1, der auch als zweiter Griffbereich bezeichnet wird. Der Griffmantel aus weichem Kunststoff hat eine gewisse Elastizität und vermittelt ein angenehmeres Greifgefühl als ein Griff, der nur aus Hartkunststoff hergestellt ist. Der weiche Kunststoff hat außerdem u. U. einen höheren Reibungskoeffizienten als Hartkunststoff. Deshalb können mit einem derartigen "2-Komponenten-Griff' u. U. höhere Torsionsmomente übertragen werden als mit einem Griff gleicher Größe aus Hartkunststoff. Dies ist von Bedeutung bei Griffen für Schraubendreher, Schraubzwingen, etc.

US 2,871,899 offenbart einen Griff zur Übertragung eines Torsionsmoments mit einem Griffkern, in dessen Längsbohrung reibschlüssig ein Schaft des Werkzeugs einpressbar ist. Der Griffkern besitzt eine zylinderförmige Mantelfläche, auf die eine Hülse mit einem ungefähr gleichen inneren Durchmesser aufgeschoben werden kann und dort reibschlüssig gehalten ist.

Das Material der Hülse ist weicher und stärker dämpfend als das Material des Griffkerns. Hierzu findet beispielsweise ein dämpfendes, gummiähnliches Material mit einer Härte von zwischen 40 und 90 Shore A Einsatz, insbesondere ein Neopren-Gummi mit einer Härte zwischen 55 und 70 Shore A und einer Zugfestigkeit zwischen 1500 und 2000 Pfund/Inch² mit einer Dehnung von ungefähr 350 %. Abweichend von einer reibschlüssigen Verbindung zwischen Hülse und Griffkern kann zusätzlich ein Kleber eingesetzt werden oder ein elastischer Formschluss in Längsrichtung eingesetzt werden. Die Hülse kann ein Spritzguss-Bauelement sein. Weiterhin können zur Erzielung eines Formschlusses in Umfangsrichtung die Außenfläche des Griffkerns und die Innenfläche der Hülse mit in Längsrichtung verlaufenden Nuten, Vorsprüngen oder Zähnen ausgestattet sein.

DE 694 21 765 T2 (EP 0 635 337 B1) geht aus von einem Stand der Technik, bei dem auf dem Schaft eines Schraubendrehers aufeinander folgende Schichten aus Kunststoffmaterialien angeformt werden. Eine zentrale Schicht, in welcher der Schaft des Schraubendrehers eingebettet ist, wird als erstes geformt, und die Schicht, welche die Peripherie des Griffs begrenzt, wird auf diese zentrale Schicht oder auf Zwischenschichten aufgeformt. Für derartige Formvorgänge werden Spritzpressen verwendet mit mehreren Spritzköpfen, üblicherweise mit zwei oder drei derartigen Köpfen. Hiervon ausgehend schlägt die Druckschrift vor, einen Schaft eines Schraubendrehers in einen Kunststoffgriff einzubetten. Ein vorderer Bereich der Mantelfläche des Griffs ist von einer Kunststoffhülse gebildet. Die Kunststoffhülse ist mit zwei koaxial ineinander liegenden Teilen mit ringförmigen Querschnitten gebildet, wobei zunächst das innenliegende Teil mit einem Spritzgießverfahren hergestellt wird und auf dieses Teil das andere, die Mantelfläche bildende Teil mit einem Spritzgießverfahren aufgeformt wird. Zur formschlüssigen Verbindung der beiden Teile in der Kunststoffhülse besitzen die Teile komplementäre Vorsprünge und Ausnehmungen. Die Hülse wird mit einer herkömmlichen Presse mit zwei Spritzköpfen hergestellt. In einem darauf folgenden Verfahrensschritt wird in einer derartigen Hülse unter Ausbildung eines radialen Zwischenraums ein Schaft angeordnet. In eine geeignete Form wird dann ein Kunststoffmaterial derart eingespritzt, dass dieses den Zwischenraum im Inneren der Hülse, einen balligen Endbereich des Griffs und einen endseitigen Mantelbereich radial außenliegend von einem Endbereich der Hülse ausfüllt. Das innere Teil der Hülse ist mit einem härteren Kunststoff gebildet als das äußere Teil der Hülse. Das Ergebnis ist ein marktüblicher 2-Komponenten-Griff, der eine relativ dünne Außenschicht aus elastischem Kunststoff und einen Griffkern aus Hartkunststoff aufweist, aber sich nicht unter Einwirkung einer Handkraft verformt.

EP 1 314 519 A1 betrifft ebenfalls Griffe für Schraubendreher. Bei diesen ist der Schaft in einen Griffkern aus einem relativ harten Kunststoff eingebettet. Der Griffkern ist zumindest teilweise mit einem verformbaren Elastomermaterial ummantelt. Zur Verhinderung einer Verletzung des verformbaren Materials der Ummantelung ist die Ummantelung mit einem dünnen Überzug überzogen, der eine Schutzschicht und eine Schicht zum Zusammenhalten der elastomeren Ummantelung bildet. Alternativ zum Einsatz eines Elastomermaterials für die verformbare Ummantelung kann ein Gelmaterial Einsatz finden. Weiterhin offenbart die Druckschrift die Anordnung der verformbaren Umhüllung, hier eines Gelkissens, in einer Hülse mit einer geschlossenen Umhüllung. Eine derartige Hülse soll auf einen Schaufelstiel oder einen Hammerstiel aufgeschoben werden, um hier einen Griff zu bilden. Durch eine zumindest teilweise Verformbarkeit der Griffoberfläche soll ermöglicht werden, dass der Griff nachgibt, wenn beispielsweise ein Benutzer an einer bestimmten Stelle stärker zugreift als an einer anderen. Auch wenn die Hand des Benutzers von der Standardform und Standardgröße abweicht, kann auf diese Weise ein besseres Fassen und Behandeln des Griffs durchgeführt werden. Wie groß die Nachgiebigkeit der Ummantelung ausgeführt wird, hängt von den Umständen des Einzelfalls und von der Art des Griffs bzw. der Art des Werkzeugs ab, das mit diesem Griff benutzt werden soll. Die Verformbarkeit des Griffs kann sich beispielsweise über den gesamten Bereich des Griffelements erstrecken, an dem ein Benutzer angreift. Ebenfalls möglich ist, dass die Verformbarkeit auf einen Teil der Griffoberfläche begrenzt ist, beispielsweise auf den Teil, an dem der Benutzer mit der Handinnenfläche angreift, während die Teile des Griffs, an denen der Benutzer mit den Fingerspitzen angreift, nicht verformbar ausgebildet sind. Eine solche Gestaltung der Griffoberfläche bietet sich beispielsweise bei Schraubendrehern an, bei denen bestimmte Bereiche der Griffoberfläche so ausgebildet sind, dass sie zum schnellen Drehen des Werkzeugs mit den Fingerspitzen gedacht sind. Die Verformbarkeit der Griffoberfläche soll hierbei auf eine bestimmte Tiefe unterhalb der Griffoberfläche begrenzt sein. Innen soll ein harter Griffkern vorhanden sein, der nicht nur zur Verbindung mit dem Schaft dienen kann, sondern auch einen festen Halt für die Übertragung der Bewegung von der Hand auf das Werkzeug bieten soll. Die Dicke der verformbaren Schicht ist aber zu gering, um eine Anpassung des Griffes an die Hand des Benutzers zu ermöglichen.

DE 92 02 550 U1 der Anmelderin offenbart einen 2-Komponenten-Griff für einen Schraubendreher, der einen Griffkern aus einem Hartkunststoff, beispielsweise Polypropylen, besitzt, der in einer ersten Form mit eingelegtem Schaft hergestellt wird. In einer zweiten Form wird der Griffkern mit einem weichen Kunststoff, beispielsweise einem thermoplastischen Elastomer mit einer Endhärte von 60-80 Shore A, ummantelt. Zur Herstellung eines kuppelförmigen Bereichs wird in eine Form ein zylinderförmiges Formstück in axialer Richtung eingeführt, welches stirnseitig die Form der Kuppe vorgibt, so dass die gefertigte Kuppe nahtlos in die weitere Mantelfläche des Griffmantels übergeht (s. a. DE 43 04 965 A1). Auch dieser Griff ist ein heute marktüblicher 2-Komponenten-Griff, der keine Anpassungsmöglichkeit an die Hand eines Benutzers bietet.

DE 35 25 163 C2 offenbart einen Griff für Schraubendreher, in dem zunächst ein Schaft mit einem Griffkern aus einem Hartkunststoff ummantelt ist. Eine endseitige, kalottenförmige Kuppe aus Hartkunststoff kann separat geformt und nachträglich mit dem Griffkern verbunden sein oder an den Griffkern angeformt werden. Eine Mehrteiligkeit empfiehlt sich, wenn die Kuppe noch aus einem härteren Material als der Griffkern bestehen soll. Bei mehrteiliger Ausgestaltung kann ein zentraler Zapfen der Kuppe in eine formentsprechende Ausnehmung des Griffkerns eintreten. Der Griffkern besitzt ungefähr mittig eine radiale Erweiterung, im Bereich welcher der Griffkern mit dem Hartkunststoff einen Teil der Mantelfläche des Griffs bildet. In axialer Richtung vor und hinter diesem Bereich liegende Teilbereiche der Mantelfläche sind mit einer Ummantelung des Griffkerns mit einem weichen Kunststoff gebildet, wobei die Erweiterung des Griffkerns vier axiale, in Umfangsrichtung verteilte Bohrungen besitzt, über die der vordere Teilbereich und der hintere Teilbereich der Mantelfläche aus weichem Kunststoff miteinander verbunden sind.

Weitere 2- oder Mehr-Komponenten-Griffe, insbesondere für Schraubendreher, bei denen zumindest ein axialer Teilbereich oder ein Teilumfang der Mantelfläche von einem auf einen harten Griffkern aufgespritzten weichen Kunststoff gebildet ist, sind beispielsweise aus DE 195 39 200 A1, DE 295 17 276 U1, EP 0 208 942 A2, DE 92 02 550 U1 oder DE 299 04 082 U1 bekannt.

EP 0 358 883 A1 offenbart einen Griff für einen Schraubendreher, bei dem sich eine vordere Hälfte und eine hintere Hälfte von einem mittigen Bereich maximalen Durchmessers kontinuierlich ohne Ausbildung von Hinterschneidungen verjüngen. Für eine derartige Ausgestaltung kann der Griff mit zwei Formhälften in einem Spritzgussverfahren hergestellt werden mit einer Teilungsfuge, die quer zu einer Längserstreckung der Schraubendreherachse gerichtet sein kann.

US 3,189,069 offenbart einen Schraubendreher mit einem reibschlüssig auswechselbar in einem Griffkern gehaltenen Schaft. Der Griffkern besitzt im Bereich seiner Mantelfläche in axialer Richtung verlaufende Rippen und Nuten. Weiterhin besitzt der Griffkern eine Umfangsnut. Auf den Griffkern ist in axialer Richtung ein Griffmantel aufgeschoben, wobei nach innen orientierte Fortsätze des Griffmantels in Umfangsrichtung formschlüssig in die Nuten des Griffkerns eingreifen. Der Griffmantel schnappt mit einem weiteren Fortsatz in die Umfangsnut ein, wodurch der Griffmantel gegenüber dem Griffkern gesichert ist. Neben dem erwähnten Formschluss liegen Teilsegmente des Griffmantels unter Ausbildung einer radialen Anpresskraft an dem Griffkern an, so dass ein Reibschluss gebildet ist. Für das Material des Griffmantels wird ein weicheres Material gewählt als für den Griffkern, beispielsweise Gummi.

Aus den Druckschriften WO 00/43166 und EP 1 163 088 B1 sind Griffe bekannt, bei denen durch eine asymmetrische Formgestaltung die ergonomischen Eigenschaften im Vergleich zu marktüblichen Griffen verbessert sein sollen. Nachteilig bei diesen bekannten Griffen ist, dass der Griffmantel aus weichem Kunststoff nur eine geringe Dicke besitzt und damit nur in einem geringen Maß nachgiebig ist. Hinsichtlich der Herstellung sind die Griffe in bestimmten Größen und Formen standardisiert, während die Hände der Benutzer verschiedene Größen und Maßverhältnisse haben. Deshalb ist insbesondere für unterschiedliche Hände von unterschiedlichen Benutzern eine optimale Ergonomie für derartige bekannte Griffe nicht gewährleistet. Bei Griffen für Schraubendreher kommt hinzu, dass bei einem Schrauben die Hand des Benutzers, die den Griff dreht, in Umfangsrichtung ihre Koppelstellung mit dem Griff laufend verändert. Der Griff kann deshalb nicht in einer optimalen ergonomischen Grundform ausgebildet werden, wie das bei den asymmetrischen Griffen gemäß WO 00/43166 und EP 1 163 088 B1 der Fall ist, bei denen die Hand im Gebrauch im Wesentlichen eine einzige Koppelstellung zu dem Griff haben kann.

EP 1 136 219 A1 beschreibt einen Verbundformkörper, der einen steifen thermoplastischen Träger sowie eine darauf angebundene dreischichtige thermoplastische Außenschicht aufweist. Die drei weichen thermoplastischen Schichten werden in einem Mono-Sandwichverfahren in einer geeigneten Form hergestellt, wobei die sich ergebende mittlere Schicht eine geringere Steifigkeit besitzen kann und geschäumt sein kann. Zum Erreichen eines schäumenden Effektes wird das in die Form eingespritzte Material derart dosiert, dass in der Form ein Hohlraum verbleibt, in welchen das Material und eine umgebende Schicht aufschäumen kann. Genannte Einsatzgebiete derartiger Verbundformkörper sind Innenverkleidungen von Kraftfahrzeugen, die Herstellung von Knöpfen, Griffen und anderen zu greifenden Gegenständen, insbesondere von Werkzeuggriffen verschiedenster Art, die Herstellung von Stühlen, besonders von Bürostühlen und speziell der Armlehnen und dgl.

### Griffe für Zangen

DE 20 2004 019 156 U1 beschreibt eine Zange mit zwei Zangenschenkeln mit zwei gleich ausgebildeten Griffen. Jeder Griff weist im Bereich der Mantelfläche drei Bereiche auf, die hintereinander liegend in Richtung des Endbereichs des Griffs zunehmende Härten besitzen. Der härteste Bereich bildet einen Griffkörper mit einer endseitigen Mantelfläche, auf den die anderen Teilbereiche zur Bildung der weiteren Bereiche der Mantelfläche aufgebracht sind. Während für den ersten Bereich ein hartes Material wie ein Hartplastik eingesetzt wird, welches in einem Spritzgussverfahren hergestellt sein kann, besteht der zweite Bereich aus einem weicheren Kunststoff. Der dritte Bereich ist mit einem Gelkissen ausgebildet. Der Schaft des Werkzeugs ist in den ersten Bereich eingebettet.

EP 0 538 632 A1 betrifft ebenfalls einen Griff für eine Zange, bei der ein Schaft eines Zangenschenkels über den außenliegenden Teilumfang mit einem weichen Kunststoff ummantelt ist, beispielsweise Polyvinylchlorid oder Polyethylen mit einer Härte zwischen 65-82 Shore A, insbesondere 66-70 Shore A, während der innenliegende Teilumfang mit einem formstabilen harten Kunststoff, insbesondere Zelluloseacetat oder Acrylnitril-Butadien-Styrol-Copolymere, ummantelt ist, beispielsweise mit einer Härte im Bereich von 85-92 Shore A, insbesondere 86-90 Shore A. Weiterhin ist es möglich, dass im Bereich des inneren Umfangs Einsätze vorgesehen sind, die ebenfalls entsprechend dem äußeren Umfangsbereich aus einem weichen Kunststoff bestehen, so dass in Umfangsrichtung ein harter Kunststoff und ein weicherer Kunststoff abwechselnd angeordnet sind.

Bei allen 2-Komponenten-Griffen, insbesondere für Schraubendreher, Kellen, Zangen, Feilen, Sägen usw. ist nach dem Stand der Technik die Außenschicht weicher als der Griffkern und verhältnismäßig dünn.

### Griffe für Schlagwerkzeuge

Aus US 3,770,033 ist ein Griff für einen Hammer bekannt. Der Griff ist als Integralschaum - Teil hergestellt. Bei einem derartigen Griff wird ein harter Kern, Stiel oder eine Seele des Hammers von dem aus Struktur-Schaum bestehenden eigentlichen Griffkörper umschlossen. Der Griffkörper wird im Querschnitt aus einer an der Seele anliegenden Schicht und einer äußeren Schicht mit relativ hoher Dichte und einer dazwischen liegenden Schicht mit geringer Dicke gebildet. Dieser Aufbau des Griffs ermöglicht eine elastische Querschnitts-Verformung des Griffs und dämpft Stöße beim Arbeiten mit dem Hammer. Die dünnen Schichten mit unterschiedlicher Dichte entstehen unter Einwirkung des Druckes, der im Inneren der Masse entsteht, wenn ein Treibmittel zur Porenbildung vergast und die Randschicht der Masse an die Wand der Formkavität gepresst und hier verdichtet wird. Zur Übertragung höherer Torsionsmomente, wie beispielsweise bei Schraubendrehern, ist ein derartiger Griff allerdings ungeeignet, da der Kern, auch in einer unrunden Querschnittsform, einen zu kleinen Durchmesser bzw. einen zu kleinen Hebelarm zur Erzeugung eines Torsionsmoments besitzt und die poröse Innenschicht alleine keine ausreichende Torsionssteifigkeit hat.

US 3,770,033 betrifft einen Griff eines Stoß- oder Schlagwerkzeugs wie einen Hammer, einen Vorschlaghammer, eine Hacke, eine Axt o. ä.. Ein Körper eines Griffs ist mit einem steifen Plastikschaum gebildet mit einer Dichte im Bereich von 35-45 Pfund/Fuß³ und mit einem zentralen, verstärkten Griffkern. Der Körper des Griffs kann aus Plastikmaterial gebildet sein, beispielsweise Polyethylen, Polystyren, Polyurethan, Polypropylen. Plastikschaum wird in eine gewünschte Form um den Griffkern gespritzt, wobei der Körper des fertiggestellten Griffs durch eine Art Presspassung mit dem Griffkern ausbilden soll. Das formgebende Verfahren schafft inhärent Schichten, die eine Innenschicht und eine Außenschicht des Körpers bilden mit einer größeren Dichte als die Dichte von Zwischenbereichen zwischen den vorgenannten Schichten mit niedriger Dichte. Die Innen- und Außenschichten haben eine Dicke von gewöhnlicherweise zwischen 0,04 bis 0,05 Inch (1,016 bis 1,27 mm).

DE 101 13 368 A1 offenbart einen Griff für ein Schlagwerkzeug, bei dem zur Stoßabsorption der Schaft in einem Griff aus einem elastischen Material aufgenommen ist. Der Griff besitzt auf der Ober- und Unterseite in axialer Richtung orientierte, durchgehende Ausnehmungen, in die weitere, über die Mantelfläche des Griffs verteilte radial orientierte Ausnehmungen münden.

DE 197 32 421 C2 betrifft ebenfalls ein Schlagwerkzeug, bei dem sich von einem Endstück oberhalb und unterhalb des Schafts zwei Hohlfinger in axialer Richtung erstrecken, die von einer elastischen Griffhülle ummantelt sind. Über die Finger soll eine Stoßabsorption erreicht werden.

US 2003/0172498 A 1 offenbart einen Griff, der Vibrationen für einen Einsatz bei einem Schlag- oder Stoßwerkzeug dämpfen soll. Auf einer Ober- sowie Unterseite des Griffs ist jeweils ein Kissen angeordnet, welches aus einer elastomeren Ummantelung und einem hierin eingeschlossenen Schaum besteht. Das Material wird in einem Spritzgussverfahren verarbeitet. Zur Herstellung der Kissen wird in einer Spritzgussmaschine das Elastomermaterial mit einem schäumenden Mittel gemischt. Die geschmolzene Mixtur wird dann in eine Form eingespritzt. Die kältere Temperatur der Form stellt während des Einspritzens eine Wärmesenke dar, so dass die Temperatur des eingespritzten schäumenden Mittels im Kontaktbereich mit der Form schneller abkühlt als im Inneren. Somit entsteht eine Art Haut aus nichtgeschäumtem Elastomermaterial. Ein Abkühlen der Haut und eine Verringerung der Temperatur des Gemisches im Inneren führt zu einer Schaumbildung im Inneren, so dass der Schaum den innerhalb der Haut verfügbaren Raum ausfüllt. Wird der Griff aus der Form entfernt, kann bei geeigneter Temperaturgestaltung eine weitere Expansion des Schaums im Inneren der Haut zu einer Dehnung der Haut führen, was eine Verringerung der Wandstärke der nichtgeschäumten Schicht zur Folge haben kann. Mit einer endgültigen Abkühlung härtet sowohl die Haut als auch der Schaum aus. Bei dem schämenden Mittel kann es sich um feste Partikel, eine Flüssigkeit oder ein Gas handeln. Somit basiert das offenbarte Verfahren auf dem Einspritzen eines einzigen Materiales, welches sowohl die Mantelschicht als auch die poröse Innenschicht bildet. Das Verfahren ist eingeschränkt hinsichtlich der Gestaltung der Schichtdicken, Porösitäten und des Materiales für die Mantelschicht und die innere Schicht. Weiterhin wird gemäß diesem Verfahren nicht so viel Material in die Formkavität eingespritzt, dass diese vollständig ausgefüllt ist. Auch infolge der Tatsache, dass nach der Entnahme des Teiles aus der Form das Schäumen nicht abgeschlossen ist, stellt sich bei Einsatz eines derartigen Verfahrens unter Umständen eine nicht vollständig porenfreie und glatte Oberfläche ein. Grund hierfür kann sein, dass der durch das Schäumen erzeugte Innendruck nicht ausreichend ist, um eine glatt an der Wand der Formkavität anliegende Mantelschicht zu bilden. Weiterhin wirkt schon beim Einspritzen in die Form das Treibmittel, was auch durch die zusätzliche Erhitzung beim Einpressen durch die Einfüllkanäle bedingt ist. Sich einmal ausbildende Bläschen an der Oberfläche können nicht so glatt gedrückt werden, dass sich eine optimale Oberfläche ergibt.

Weitere Griffe für Schlag- und Stoßwerkzeuge sind in US 6,370,986 B1, US 5,490,437 und US 6,619,408 B1 beschrieben.

DE 299 04 043 U1 betrifft ein Einsatzgebiet, welches Stoß- und Schlagwerkzeugen verwandt ist, nämlich eine Maschine wie beispielsweise eine Schlagbohrmaschine, ein Schleifgerät o. ä. Eine Griffschale, die beispielsweise aus Kunststoff oder Metall gebildet ist, ist mit einer Oberflächenbeschichtung aus Polyurethan versehen, die eine unterschiedliche Zellstrukturierung aufweisen kann.

### Griffe für sonstige Einsatzzwecke

US 4,023,606 offenbart eine Anordnung eines Blattes eines Eispickels in einer rohrförmigen Hülse. Ein geschäumtes Kunststoffmaterial ist zwischen die Hülse und den Schaft eingespritzt.

US 4,338,270 betrifft einen Griff für einen Golfschläger, der reibschlüssig auf den Schaft aufbringbar ist. Der Griff ist mit einer Hülse aus einem flexiblen Schaum gebildet, der radial außenliegend eine Oberflächenhaut ausbildet. Die nicht zellförmige oder poröse Außenhaut besitzt eine Dicke von ungefähr 0,005 Inch bis 0,020 Inch (0,127 bis 0,508 mm). Der Schaumbereich weist eine Härte von zwischen 55 und 65 Shore A auf. Die äußere Haut dient als Schutz gegen Abrasion oder Erosion des Griffs im Gebrauch. In einem Endbereich besitzt der Griff eine Kappe, die eine innenliegende sowie eine außenliegende Hülse besitzt, wobei die vorgenannten Hülsen über radial orientierte Rippen miteinander verbunden sind. Während die außenliegende Hülse die Mantelfläche im Endbereich bildet, dient die innenliegende Hülse einer Abstützung der Kappe an dem Schaft. Für die Kappe kommt ein Material mit einer Härte zwischen 70 und 90 Shore A zum Einsatz. Mögliche für den den Griff bildenden Schaum einsetzbare Materialien sind Polyurethan in Verbindung mit Polyol und Isocyanat. Als Treibmittel findet vorzugsweise Trichloromonofluoroethan Einsatz.

US 5,355,552 betrifft einen luftgefederten Griff für einen Tennisschläger, einen Hammer, ein Fahrrad o. ä. zur Absorption von Stößen. Hierzu besitzt der Griff Hohlkammern, in denen Luft, ggf. unter einem erhöhten Druck, angeordnet ist.

US 4,321,040 offenbart einen zweiteiligen Griff für ein medizinisches Gerät, bei dem zwischen einer flexiblen äußeren Hülse und einem Griffkern ein Verformungen ermöglichender Zwischenraum vorgesehen ist.

EP 1 136 219 A1 offenbart einen Verbundformkörper, bei dem ein thermoplastischer Träger mit drei weichen thermoplastischen Schichten beschichtet ist, um besonders günstige "Soft-Touch"-Eigenschaften sowie günstige Verschleißeigenschaften zu erhalten. Hierbei ist die außen liegende Schicht härter als eine darunterliegende Schicht. Bei dem Verbundformkörper handelt es sich beispielsweise um eine Innenverkleidung von Kraftfahrzeugen, Armaturenbretter, Griffe, Bedienungshebel, Schalthebelknöpfe, Werkzeuggriffe verschiedenster Art, Lederersatzmaterialien in der Polsterindustrie für Sitzmöbelteile oder Armlehnen von Stühlen.

GB 1 255 970 offenbart ein Sandwich-Verfahren, bei dem in eine Form zwei oder mehr Ladungen eines thermoplastischen Materials durch eine gemeinsame Einspritzdüse eingespritzt werden. Ein Kernmaterial kann hierbei mit einem Treibmittel versehen sein und in eine Form eingespritzt werden, wobei die Größe der Form die Menge des einzuspritzenden ersten und zweiten Materials vorgibt. Um dann ein Aufschäumen des einen Materials zu ermöglichen, wird die Form vergrößert. Eine derartige Vergrößerung kann herbeigeführt werden durch sprungartige oder allmähliche Öffnung der Form durch externe Kräfte. Ebenfalls möglich ist, dass die Expansion des Materials mit dem Aufschäumen selbst zumindest teilweise die Form vergrößert.

### STAND DER TECHNIK AUS NICHT GATTUNGSGEMÄßEN TECHNOLOGIEGEBIETEN

Die Druckschriften DE-OS 2 353 816, GB 1,156,217 und GB 1, 219,097 betreffen die Herstellung eines Gegenstandes in einem Spritzgussverfahren, der aus einem Kern eines geschäumten Materiales aus Kunststoff sowie einer Oberflächenschicht aus Kunststoff besteht. Als Anwendungsgebiet derartiger Gegenstände nennt GB 1,156,217 Leisten für Kraftfahrzeuge, Wandungen für Taschen, Koffer, Gehäuse von Fernsehgeräten, Sitze und ähnliches, so dass die genannten Druckschriften keinerlei Berührung zu dem hier vorliegenden Technologiegebiet einer Herstellung von Griffen für Werkzeuge aufweisen. In einem besonderen Herstellungsverfahren offenbart DE-OS 2 353 816 ein Herstellungsverfahren, bei dem die Menge eines in eine Form eingespritzten Materiales für eine Oberflächenschicht und eines noch nicht ausgeschäumten Materiales für den Kern so groß ist, dass auch ohne ein Schäumen des Materiales für den Kern die Kavität ausgefüllt wird. Zur Ermöglichung eines Aufschäumens des Materiales für den Kern wird anschließend die Kavität vergrößert.

Aus der Druckschrift ES 2 254 040 ist ein Haltegriff für ein Fahrzeugdach bekannt, der ungefähr U-förmig ausgebildet ist. Der Haltegriff ist mit einem geschlossenen U-förmigen Grundkörper eines ersten Materiales gebildet, in welchem sich ein mit einem Treibmittel aufgeschäumtes Kunststoffmaterial befindet.

### AUFGABE DER ERFINDUNG

Der Erfindung liegt die Aufgabe zugrunde, ein Verfahren zur Herstellung eines ein Tensionsmoment übertragenden Griffs für ein Werkzeug vorzuschlagen, bei dem
- einer Ausgestaltung einer inneren Schicht des Griffes mit einem porösen Material und
- deren Wechselwirkung mit einer äußeren Schicht sowie
- der radialen Elastizität des Griffes und
- den Kraftübertragungseigenschaften des Griffes
besondere Aufmerksamkeit geschenkt ist.

### LÖSUNG

Die Aufgabe der Erfindung wird gemäß einem erfindungsgemäßen Verfahren gemäß den Merkmalen des unabhängigen Anspruchs 1 gelöst. Weitere Ausgestaltungen der Erfindung ergeben sich entsprechend den Merkmalen der abhängigen Ansprüche 2 bis 8.

### BESCHREIBUNG DER ERFINDUNG

Die vorliegende Erfindung nach Anspruch 1 baut auf auf folgendem Stand der Technik:
US 6,370,986 B1 offenbart ein Verfahren zur Herstellung eines Griffes für ein Schlagwerkzeug, insbesondere einen Hammer über ein "Double Shot Molding". Hierzu wird ein Schaft des Hammers in eine erste Form eingelegt. In die erste Form wird ein schäumendes Material, beispielsweise ein mit einem Gas angereichertes Polyvinylchlorid, eingespritzt, welches nach einem Aufschäumen und Aushärten die erste Form vollständig ausfüllt und beispielsweise eine Härte von 45 bis 65 Shore H besitzt. Nach dem Aushärten wird die durch den Schaum gebildete innere Schicht mit dem Schaft in eine zweite Form eingelegt, deren Kavität größer ist als die der ersten Form. In den Zwischenraum zwischen der Mantelfläche zwischen der porösen inneren Schicht und der Kavität der zweiten Form wird ein zweites, nicht poröses Material eingespritzt. Dieses härtere Material ummantelt die poröse innere Schicht. Aus US 6,370,986 B1 ist somit die Fertigung eines Griffes für ein Schlagwerkzeug bekannt unter Einsatz von zwei Formen, wobei diese Formen jedoch zur Begrenzung unterschiedlicher Schichten des Griffes eingesetzt sind. Es ist zu vermuten, dass für das in US 6,370,986 beschriebene Herstellungsverfahren die poröse Innenstruktur nicht erhalten bleibt.

US 2003/0172498 A1 offenbart das Einspritzen eines heißen Gemisches eines elastomeren Materiales mit einem schäumenden Mittel in eine Form. Dieses Gemisch härtet mit Ausbildung einer nicht porösen Substratummantelung und einer nicht porösen Außenschicht durch beschleunigtes Abkühlen im Kontaktbereich mit dem Substrat und der Form aus. Zwischen der äußeren Schicht und der das Substrat ummantelnden Schicht ist das noch nicht ausgehärtete heiße Gemisch ausgebildet. Nach einer geeigneten Zeit wird der Griff aus der Form entfernt. Dieses beseitigt die Beschränkung der Außenkontur durch die Form, so dass in Folge des schäumenden Mittels eine weitere Expansion erfolgen kann, die die das Substrat ummantelnde Schicht und die äußere, nicht poröse Schicht dehnen kann. Der Druckschrift ist zu entnehmen, dass eine Steuerung der Umgebungsbedingungen einerseits während der Zeit, die sich der Griff in der Form befindet, und andererseits während einer Zeit, nachdem der Griff aus der Form entfernt worden ist, erfolgt, wodurch das schließlich fertig gestellte Produkt bestimmt wird.

Weiterhin ist aus WO 2007/079787 der Anmelderin ein Verfahren bekannt, bei dem für ein Werkzeug eine einen Schaft ummantelnde, nicht poröse Schicht, eine verhältnismäßig weiche innere Schicht und eine nicht poröse äußere Schicht dadurch hergestellt wird, dass in eine Form zunächst ein erstes Material eingespritzt wird, welches später sowohl die äußere Schicht als auch die den Schaft ummantelnde Schicht bildet. Vor dem endgültigen Aushärten des ersten Materials wird in dieses und in dieselbe Form ein zweites Material eingespritzt. Da das erste Material im Kontaktbereich mit dem Schaft und der Form vorrangig aushärtet bzw. ausgehärtet ist, bildet das zweite Material automatisch eine innere Schicht und verdrängt das erste Material sowohl radial nach innen als auch nach außen als auch in axialer Richtung.

Für die Herstellung des Griffes erfolgt zunächst, im Wesentlichen entsprechend WO 2007/079787, das Einspritzen von zwei unterschiedlichen Materialien in dieselbe Form, wobei die Materialien hinsichtlich des Werkstoffes unterschiedlich sein können. Ebenfalls möglich ist, dass die Materialien grundsätzlich mit denselben Werkstoffen gebildet sind, wobei allerdings das erste Material nicht mit einem Treibmittel versetzt sein kann, während das zweite Material mit einem Treibmittel versehen ist. Das Einspritzen der beiden Materialien in eine einzige Form stellt gegenüber der aus US 6,370,986 B1 bekannten Ausführungsform eines Verfahrens zur Herstellung eines Griffes eine bedeutende Verbesserung im Hinblick auf die erzielbaren Eigenschaften des Griffes dar, wie noch näher erläutert wird. Andererseits ist erkannt worden, dass es nicht gemäß US 2003/0172498 A1 zwingend erforderlich ist, die Ummantelungsschicht, die innere Schicht und die äußere Schicht mit demselben Material auszubilden und diese in einem einzigen Spritzvorgang in die Form einzuspritzen, wobei das erfindungsgemäße abweichende Vorgehen nachfolgend noch beschriebene Vorteile in sich bergen kann.

Werden bei dem Verfahren nach Anspruch 1 gleiche Werkstoffe für die innere Schicht und die äußere Schicht eingesetzt, kann gezielt das für die äußere Schicht eingesetzte Material nicht mit einem Treibmittel versehen werden, welches unter Umständen die Ausbildung einer definierten härteren, nicht porösen äußeren Schicht stören könnte.

Die Wahl des Materials und/oder des Treibmittels, der Mischungsverhältnisse und der Verfahrensparameter, wie beispielsweise die Temperatur und/oder Einspritzgeschwindigkeiten und Drücke für das zweite Material können gezielt für die Ausbildung der verhältnismäßig weichen, inneren Schicht ausgewählt werden, ohne dass Randbedingungen für eine Ausbildung der äußeren Schicht berücksichtigt werden müssen, wie dies entsprechend US 2003/0172498 A1 der Fall wäre. Außerdem ermöglicht die genaue Dosierbarkeit der Einspritzmengen zur Ausbildung der äußeren und inneren Schicht, deren Eigenschaften ebenfalls zu beeinflussen.

Weitere verbesserte konstruktive Gestaltungsmöglichkeiten können sich ergeben, wenn die für die Materialien eingesetzten Werkstoffe für die innere Schicht und die äußere Schicht unterschiedlich sind. Hier kann durch Wahl des Werkstoffes gezielt den Anforderungen an die innere Schicht einerseits und die äußere Schicht andererseits Rechnung getragen werden: Beispielsweise wird für die äußere Schicht ein verhältnismäßig harter Werkstoff ausgewählt, der eine solide Mantelfläche ausbildet auch bei rauem Einsatz des Werkzeuges. Weiterhin kann durch die Wahl des Werkstoffs eine Beständigkeit der äußeren Schicht gegenüber kontaminierenden, unter Umständen die Oberfläche angreifenden Flüssigkeiten gewährleistet werden. Ebenfalls kann eine Gestaltung der äußeren Schicht einer guten Haptik des Werkzeuges und einer guten reibschlüssigen Übertragung von Umfangskräften Rechnung tragen. Andererseits kann der Werkstoff für die innere Schicht und damit für das zweite Material das gewünschte Steifigkeitsverhalten der inneren Schicht und damit der Abstützung für die äußere Schicht gewährleisten, wobei beispielsweise eine gute radiale Nachgiebigkeit, aber eine steife Übertragung von Umfangsmomenten gewünscht und realisiert sein kann.

Während gemäß US 6,370,986 B1 die Menge des in eine erste Form eingespritzten Materiales sorgfältig dosiert werden muss, so dass in der ersten Form noch ein Freiraum verbleibt, in welchem das erste Material aufschäumen kann, ist jetzt erkannt, dass es während des aufschäumenden Prozesses nicht vorteilhaft ist, die Außenkontur des Griffes während des Aufschäumvorganges und während des Ausdehnens des zweiten Materiales konstant vorzugeben. Zu dem Zeitpunkt, zu dem bereits die äußere Schicht ausgebildet ist und zumindest teilweise ausgehärtet ist, wird die Begrenzung, die durch die Form, in die das erste und zweite Material eingespritzt werden, gegeben ist, beseitigt. Hierzu kann die Form entweder geöffnet, d. h. zumindest teilweise vergrößert werden, oder aber der Griff in eine zweite Form mit einer zumindest teilweise vergrößerten Kavität eingelegt werden. Die dann einsetzende Expansion des aufschäumenden zweiten Materials kann zu plastischen und/oder elastischen Verformungen der äußeren Schicht führen. Diese können auch zu einer "Vorspannung" der äußeren Schicht führen, die mit einer Versteifung der äußeren Schicht verbunden ist.

Während zweifelhaft ist, ob bei dem Herstellungsverfahren gemäß US 6,370,986 B1 eine gewünschte Elastizität nach Anspruch 1 des Griffs erzielt werden kann, können bei dem Herstellungsverfahren nach Anspruch 1 sowohl die Elastizität als auch die Dicke und die Eigenschaften der äußeren Schicht vorbestimmt werden. Dies kann durch die Dosierung des ersten und zweiten Materials und/oder durch die zugelassene Ausdehnung des elastischen Griffbereichs erfolgen. Zu einem Zeitpunkt, zu dem bereits die äußere Schicht ausgebildet und zumindest teilweise ausgehärtet ist, wird die innere Schicht aber noch eine so hohe Temperatur hat, dass das Treibmittel vergasen kann und ein Volumen vergrößernde Poren bilden kann, die Begrenzung beseitigt, die durch die Form, in die das erste und zweite Material eingespritzt worden ist, vorgegeben ist. Hierzu kann die Form entweder etwas geöffnet werden, d. h. zumindest teilweise vergrößert werden, so dass der Griff sich zumindest in Richtung einer Querachse ausdehnen kann. Eine andere Möglichkeit besteht darin, dass der Griff ganz aus der ersten Form herausgenommen wird. Sein elastischer Bereich kann sich dann radial in alle Richtungen ausdehnen, wodurch eine Längsdehnung gegebenenfalls durch eine Endkappe und eine Stirnscheibe, den hinteren und vorderen Endbereich am Griffkern aus Hartkunststoff verhindert werden kann. Die Ausdehnung des Griffs wird dann im Wesentlichen durch die Verteilung der die innere Schicht bildenden Materialmasse mit dem Treibmittel bestimmt.

Somit ist ein einfaches Verfahren nach Anspruch 1 bereitgestellt, bei dem zwei Materialien in eine einzige Form eingespritzt werden können, wobei sich dennoch zwei oder drei Schichten automatisch ergeben. Unabhängig davon, ob mit dem Einspritzen des zweiten Materials die erste Form vollständig gefüllt ist oder nicht kann durch das Öffnen der Form oder durch das Entnehmen des Griffes aus der Form hinreichender Verformungsweg für ein Aufschäumen des zweiten Materials bereitgestellt werden.

Für eine weitere Ausgestaltung des Verfahrens nach Anspruch 1 wird der Griff vor dem Aushärten zumindest eines Teilbereichs des zweiten Materials in eine zweite Form eingelegt, deren Kavität zumindest teilweise einen größeren Durchmesser aufweist als die Form, in die das erste und zweite Material eingespritzt wird. Während beim einfachen Öffnen der Form oder Entnehmen des Griffes aus der ersten Form die Endkontur des Griffes nach dem vollständigen Aushärten und Aufschäumen desselben im Wesentlichen durch die Verfahrensparameter, beispielsweise
- die Zeiten des Einspritzens,
- die Einspritzdrücke,
- Geschwindigkeiten,
- Dauern,
- Volumina,
- den Zeitpunkt des Entnehmens aus der Form und
- die Temperaturen

bestimmt ist, kann durch Einlegen des Griffes in eine zweite Form die sich ergebende ausgehärtete Form fest und a priori vorgegeben werden. Ebenfalls möglich ist, dass in einer Endphase der Ausdehnung der inneren Schicht in Folge der Expansion die äußere Schicht gegen die Wandung der Formkavität der zweiten Form gepresst wird, wodurch sich ein gewisser Komprimierungseffekt ergibt, welcher mit dem endgültigen Aushärten eine verbesserte, versteifte Struktur bereitstellen kann.

### KURZBESCHREIBUNG DER FIGUREN

Im Folgenden werden in den Figuren dargestellte bevorzugte Ausführungsbeispiele weiter erläutert und beschrieben.
- **Fig. 1 bis 6**: zeigen eine Herstellung eines Griffs für einen Schraubendreher in einem Sandwichverfahren mit einem sukzessiven Einspritzen eines ersten Materials sowie eines zweiten Materials in dieselbe Form.
- **Fig. 7 bis 9**: zeigen eine nicht vom wicht vom Wortlaut der Patentansprüche umfasste Herstellung eines Griffs für eine Zange in einem Sandwichverfahren mit einem sukzessiven Einspritzen eines ersten Materials und eines zweiten Materials in dieselbe Form.
- **Fig. 10 und 11**: zeigen eine Ausführungsform eines Griffes mit einem Griffkern mit rundem Grundquerschnitt und zwei auf gegenüberliegenden Umfangsseiten auskragenden Rippen in einem Längsschnitt und einem Querschnitt.
- **Fig. 12 und 13**: zeigen eine Ausführungsform eines Griffes mit in erster Näherung rechteckigem Griffkern in einem Längsschnitt und einem Querschnitt.
- **Fig. 14**: zeigt eine Ausführungsform eines Griffes mit sternförmigem Griffkern in einem Querschnitt.
- **Fig. 15 und 16**: zeigen eine Ausführungsform eines Griffes in einem Längsschnitt und einem Querschnitt, wobei ein Griffkern Rippen aufweist, die sich durch eine innere Schicht hindurch bis zu einer relativ dicken äußeren Schicht des Griffs erstrecken.
- **Fig. 17**: zeigt eine Ausführungsform eines Griffes in einem Querschnitt, bei dem abweichend zu dem in Fig. 15 und 16 dargestellten Ausführungsbeispiel ein Griffkern mit in erster Näherung rechteckigem Querschnitt vorgesehen ist, der sich durch eine innere Schicht bis zu einer äußeren Schicht erstreckt.
- **Fig. 18**: zeigt eine Ausführungsform eines Griffes in einem Längsschnitt, bei der der Griff mit zwei über eine Schnappverbindung oder mit axialem Formschluss miteinander verbundenen Bestandteilen gebildet ist.
- **Fig. 19**: zeigt eine Ausführungsform eines Griffes in einem Längsschnitt, bei der der Griffkern hantelförmige Endbereiche besitzt, zwischen denen sich um einen Mittenbereich des Griffkerns eine Griffkernummantelung, eine innere Schicht und eine äußere Schicht erstrecken.
- **Fig. 20**: zeigt eine Ausführungsform eines Griffes in einem Längsschnitt, für die sich der Griffkern nicht bis zum Ende des Griffs erstreckt, sondern in der das Ende des Griffkerns von der Griffkernummantelung, einer weicheren inneren Schicht und einer äußeren Schicht ummantelt ist.
- **Fig. 21**: zeigt eine Ausführungsform eines Griffes in einem Teillängsschnitt, für die der Griffkern mit in dem Endbereich unverändert durchgehendem Querschnitt ausgebildet ist.
- **Fig. 22 bis 24**: zeigen eine Ausführungsform eines Griffes für einen Einsatz an einer Kelle, in einer Draufsicht auf die Kelle mit Griff sowie in einem Längsschnitt und einem Querschnitt des Griffes.
- **Fig. 25 und 26**: zeigen in Verbindung mit der unteren Halbebene von Fig. 25 eine Ausführungsform eines Griffes im Längsschnitt und Querschnitt, bei der Rippen eines Griffkerns eine Griffkernummantelung durchsetzen und sich in eine innere Schicht erstrecken, die von einer härteren äußeren Schicht umgeben ist.
- **Fig. 27**: zeigt in Verbindung mit der oberen Halbebene in Fig. 25 eine Ausführungsform eines Griffes im Querschnitt, für die Rippen des Griffkerns übergehen in Stege, die einstückig die äußere Schicht mit einer Griffkernummantelung verbinden und eine zwischen Außenschicht und Griffkernummantelung angeordnete weichere innere Schicht durchsetzen, wobei die innere Schicht in Umfangsrichtung von den Stegen unterbrochen ist.
- **Fig. 28**: zeigt eine Ausführungsform eines Griffes im Querschnitt für einen Zangenschenkel einer Zange, ähnlich Fig.8 und 9.
- **Fig. 29 und 30**: zeigen eine Ausführungsform eines Griffes für einen Hammer in einem Längsschnitt sowie einem Querschnitt.
- **Fig. 31 und 32**: zeigen eine Ausführungsform eines Griffes im Längsschnitt und im Querschnitt, bei der ein Griffkern mit Rippen von einer weichen Schicht ummantelt ist, die wiederum von einer härteren, relativ dicken äußeren Schicht ummantelt ist.
- **Fig. 33**: zeigt einen Querschnitt durch eine Form für eine Herstellung eines Griffes in einem Sandwichverfahren, wobei die Form drei über den Umfang verteilte Eintrittsöffnungen besitzt.
- **Fig. 34**: zeigt einen Längsschnitt durch eine Form für eine Herstellung eines Griffes in einem Sandwichverfahren, wobei die Form axial versetzte Eintrittsöffnungen besitzt.
- **Fig. 35**: zeigt die Herstellung eines Griffes in einem Intervall-Sandwich-Spritzgießverfahren in einem Längsschnitt.
- **Fig. 36**: zeigt die Herstellung eines Griffes in einem Intervall-Sandwich-Spritzgießverfahren in einem Querschnitt.
- **Fig. 37**: zeigt den Griff gemäß Fig. 35 und 36, der vor dem Aushärten zumindest der inneren Schicht in eine zweite Form eingelegt ist, in einem Halblängsschnitt, wobei sich zwischen der Wandung der Form und der Mantelfläche des Griffes ein Zwischenraum ergibt.
- **Fig. 38**: zeigt den Griff gemäß Fig. 37 in einem Querschnitt.
- **Fig. 39**: zeigt eine Fig. 37 entsprechende Ansicht nach dem Aushärten der Schichten, wobei infolge der aufblähenden Wirkung des Treibmittels und der entstehenden oder sich verstärkenden Porosität der Zwischenraum gemäß Fig. 37 ausgefüllt ist.
- **Fig. 40**: zeigt eine Fig. 38 entsprechende Ansicht nach dem Aushärten der Schichten, wobei infolge der aufblähenden Wirkung des Treibmittels und der entstehenden oder verstärkenden Porosität der Zwischenraum gemäß Fig. 38 ausgefüllt ist.

### FIGURENBESCHREIBUNG

### A. AUSFÜHRUNGSFORMEN GEMÄß WO 2007/079787

### I. Allgemeines

Im Folgenden bezeichnet beispielsweise eine äußere Schicht eine Schicht eines Griffes, deren äußere Mantelfläche die vom Hand eines Benutzers beaufschlagte Mantelfläche des Griffes bildet, während eine innere Schicht radial nach innen an die äußere Schicht anschließt und einen Griffkern ummantelt, der aus Hartkunststoff besteht und einen Schaft ummantelt. Selbstverständlich kann bspw. abweichend hierzu die äußere Schicht im Inneren des Griffes liegen und/oder zwischen innere Schicht und Griffkern mindestens eine Innenschicht, Griffkernummantelung oder ähnliches zwischengeordnet sein.

Das Verfahren betrifft einen Griff 1 für ein Werkzeug, in dem ein Schaft 2 eines Funktionsteils des Werkzeugs radial innenliegend aufgenommen ist und auf den im Bereich seiner radial außenliegenden Mantelfläche ein Benutzer des Werkzeugs Kräfte aufbringen kann, wobei es sich um Kräfte
- in Richtung einer Längsachse 3-3,
- quer zu dieser,
- Torsionsmomente um die Längsachse 3-3 oder
- Biegemomente quer zu der Längsachse
handeln kann. Bei dem Werkzeug kann es sich um ein beliebiges Werkzeug handeln, insbesondere eine Säge, eine Kelle, einen Hammer, eine Zange, einen Stechbeitel, ein Hand-Gartengerät oder ein Messer.

Für einen besonderen Einsatzzweck findet der Griff Einsatz für ein Werkzeug, bei dem über den Griff Torsionsmomente um die Längsachse 3-3 übertragen werden müssen als ein Haupt- oder Nebenzweck des Werkzeugs, zum Beispiel bei einem Schraubendreher. Derartige Werkzeuge unterscheiden sich insbesondere von Stoß- oder Schlagwerkzeugen:
Bei der Bedienung eines Schlagwerkzeugs wird das Schlagwerkzeug von dem Benutzer in einer Ausholbewegung beschleunigt und mit einem Impuls versehen. Für eine derartige Beschleunigung des Schlagwerkzeugs ist die Steifigkeit eines Schlagwerkzeugs unerheblich, so dass das Schlagwerkzeug gleichermaßen für einen weichen Griff wie für einen harten Griff adäquat beschleunigt und dem zu hämmernden Objekt zugeführt werden kann. Mit dem genannten Impuls trifft das Schlagwerkzeug auf das zu schlagende Objekt, wobei der Impuls des Schlagobjekts auf das zu schlagende Objekt übertragen wird. Der auf das zu schlagende Objekt ausgeübte Impuls ist dabei davon unabhängig, ob das Schlagwerkzeug bei dem Stoß fest gehalten wird, auf das Objekt gepresst wird oder "frei zurückschwingen" kann. Demgemäß presst ein Fachmann beim Schlagen mit einem Schlagwerkzeug dieses nicht auf das zu schlagende Objekt, sondern lässt das Schlagwerkzeug für die Übertragung des Impulses auf das zu schlagende Objekt eher frei zurückschwingen. Dies bedeutet, dass für das Auftreffen die Hand des Benutzers nicht zwingend eng und steif um den Griff geschlossen werden muss, sondern auch für diese Phase ein beliebig weicher und elastischer Griff zum Einsatz kommen kann. Während und in zeitlicher Umgebung des eigentlichen Stoßes überträgt damit der Benutzer im Wesentlichen seitliche Führungskräfte über den Griff auf das Schlagwerkzeug. Um die Übertragung von Stößen auf die Hand des Benutzers, auch bei einem "fehlerhaften", festen Umschließen des Griffs, zu mindern oder zu vermeiden, schlagen die eingangs genannten Druckschriften für Schlag- oder Stoßwerkzeuge vor, dass der Griff weiche oder elastische Bestandteile aufweist, die insbesondere in Stoßrichtung, also auf der Oberseite sowie auf der Unterseite vorgesehen werden, um eine gezielte Elastizität in Stoßrichtung herbeizuführen. Damit beruhen Ausgestaltungen von Griffen für Stoß- und Schlagwerkzeuge auf der Erkenntnis, den Griff gerade in Richtung der zu übertragenden Kräfte, nämlich in Richtung des Stoßes, elastisch, gedämpft und weich auszubilden. Eine derartige Ausgestaltung für abweichende Griffe, insbesondere für Griffe, mit denen Momente um die Längsachse übertragen werden sollen, führt zu in der Praxis nicht einsetzbaren Werkzeugen. Mögliche Einsatzzwecke der Griffe mit einer Torsionsmoment-Übertragung sind beispielsweise Schraubendreher oder Schraubzwingen.

Grundsätzlich besitzt ein Griff radial innenliegend einen Schaft 2, der einen unrunden Übertragungsquerschnitt 4 oder von einem runden Querschnitt ausgehende Rippen 5 besitzen kann. Der Schaft 2 ist von einem Griffkern 6 teilweise oder vollständig ummantelt, wobei sich Teile des Übertragungsquerschnitts 4 oder der Rippen 5 des Schafts durch den Griffkern 6 radial nach außen erstrecken können. Der Griffkern 6 ist vorzugsweise im Bereich seiner Außenfläche ebenfalls unrund ausgebildet mit einem Übertragungsquerschnitt 7 oder Rippen 8. Der Griffkern 6 kann von einer Griffkernummantelung 9 teilweise oder vollständig umgeben sein, wobei sich ebenfalls Teilbereiche der Übertragungsquerschnitte 7 oder der Rippen 8 durch die Griffkernummantelung 9 erstrecken können. Weiterhin vorgesehen sein kann eine die Griffkernummantelung 9 zumindest teilweise umgebende weiche Schicht 10 (innere Schicht 28), die zumindest teilweise von einer Außenschicht 11 (äußere Schicht 27) ummantelt sein kann. Griffkernummantelung 9, weiche Schicht 10 und/oder Außenschicht 11 können Rippen, Vorsprünge, Fortsätze oder Stege (im Folgenden Rippen 12) aufweisen, mit denen die genannten Schichten 9-11 durch eine benachbarte Schicht mit einer weiteren Schicht verbunden sind. Alternativ oder zusätzlich können Rippen, Fortsätze, Vorsprünge, Stege (im Folgenden Rippen 13) vorgesehen sein, die sich lediglich teilweise in eine benachbarte Schicht erstrecken und im Bereich welcher eine radiale Erstreckung einer benachbarten Schicht verringert ist. Die Rippen 13 können dabei sowohl radial nach innen als auch radial nach außen von einer die Rippen tragenden Schicht orientiert sein.

Sämtliche vorgenannten Bestandteile eines Griffs 1 können alternativ oder kumulativ eingesetzt werden. Ebenfalls eine Zwischenordnung zusätzlicher weiterer Schichten, loser Partikel, eines Gels oder eines Fluids ist ebenfalls möglich.

Für eine weitere Ausführungsvariante ist die weiche Schicht 10 oder innere Schicht 28 teilweise oder vollständig von einer härteren Außenschicht 11 oder äußeren Schicht 27 ummantelt, wobei diese hinsichtlich der Wahl ihrer Steifigkeit und der radialen Erstreckung derart konstruktiv vorgegeben ist, dass die Außenschicht 11 durch von der Hand des Benutzers aufgebrachte Kräfte radial verformt werden kann, womit eine elastische Verformung der weichen Schicht 10 einhergeht.

Neben den genannten Bestandteilen des Griffs 1 kann der Griff 1 zusätzliche Bestandteile aufweisen wie beispielsweise ein Auge 15 oder Querloch, insbesondere im dem Funktionsteil abgewandten Endbereich des Griffs 1, wobei sich das Auge 15 quer zur Längsachse 3-3 durch den Endbereich erstreckt. Über ein Auge 15 kann das Werkzeug aufgehängt werden oder ein Hilfselement in den Griff 1 eingesteckt werden. Beispielsweise kann ein Schaft eines weiteren Schraubendrehers durch das Auge 15 durchgeführt werden kann, über den dann ein zusätzliches Betätigungsmoment auf den Griff 1 ausgeübt werden kann.

Die Bestandteile des Griffs 1 können stoffschlüssig aneinander angebunden sein. Ebenfalls denkbar ist der Einsatz eines auswechselbaren Funktionsteils mit einem Griff, in den der Schaft 2 des Funktionsteiles, insbesondere mit umgebenden Schichten, gegenüber weiteren, radial außenliegenden Bestandteilen des Griffs auswechselbar eingesetzt ist. Insbesondere im Zusammenhang mit derartigen auswechselbaren Funktionsteilen kann der Griff 1 über zusätzliche Haltevorrichtungen verfügen s. bspw. EP 1563693 B1 und EP 1 752 256. Weiterer optionaler Bestandteil eines Griffes ist eine Kuppe oder Kappe im Endbereich des Griffes, über die Stöße oder Schläge auf den Griff aufbringbar sind.

Für die weiche Schicht 10 (innere Schicht 28) sind beliebige konstante oder verändertiche radiale Erstreckungen möglich, die sich aus der Differenz des radialen Abstandes vom Griffkern bis zu der Griffoberfläche abzüglich der Dicke der Schicht 11 ergibt. Die radiale Erstreckung ändert sich im axialen Verlauf über die Grifflänge und wird zum vorderen Ende des Griffes hin schließlich Null. Andererseits hängt die radiale Erstreckung von dem absoluten Durchmesser des Griffes ab. Lediglich beispielhaft kann die radiale Erstreckung zumindest in einem Teilumfangsbereich einer maximalen Erstreckung im Bereich von 3,5; 4; 6 oder 8 mm liegen, während bspw. eine entsprechende minimale Erstreckung zwischen 0,5 mm und 3 mm, insbesondere 1 mm und 2,5 mm liegt oder kleiner ist als 1,5 mm, 2 mm oder 2,5 mm. Dies gilt insbesondere für eine mit einem weicheren Material gebildete innere Schicht 28 (zweites Material 23; weiche Schicht 10) und im Bereich des maximalen Durchmessers der Mantelfläche des Griffes. Die Außenschicht 11 (erstes Material 22; äußere Schicht 27) kann hingegen eine in Umfangsrichtung konstante radiale Erstreckung im Bereich zwischen 0,5 und 4 mm oder 0,5 bis 2,5 mm aufweisen, während die radiale Erstreckung in axialer Richtung variieren kann.

In einer besonderen Ausführung kann die Dicke der äußeren Schicht 27 eine radiale Erstreckung, zumindest in einem Teilumfangsbereich, von 30 bis 100 % der radialen Erstreckung der inneren Schicht 28 haben.

Benachbarte Schichten oder Bestandteile können formschlüssig, stoffschlüssig und/oder reibschlüssig oder ein Rast- oder Sperrverbindung miteinander verbunden sein.

### II. Materialien

Ein Schaft 2 kann bspw. mit faserverstärktem Kunststoff, Metall, Stahl oder Holz gebildet sein.

Als kostengünstige, aber zuverlässige Materialien für einzelne Bestandteile oder Schichten des Griffes kommt ein harter Kunststoff für den Griffkern 6 zum Einsatz, während für die Griffkernummantelung 9 und die Außenschicht 11 (äußere Schicht 27) ein erstes weiches Material 22 sowie für die weiche Schicht 10 (innere Schicht 28) ein zweites weiches Material 23 zum Einsatz kommt, wobei die beiden weichen Materialien unterschiedliche Härte haben, nämlich die äußere Schicht 27 härter ist als die innere Schicht 28. Mögliche Materialien sind (ohne Einschränkung auf diese) ein thermoplastisches Elastomer (TPE), ein thermoplastisches Polyurethan (TPU), ein thermoplastisches Polyolefin (TPO), Polypropylen, EPDM-Kautschuk, PVC oder Styrol-Block-Copolymer. Weiterhin können für die unterschiedlichen Schichten insbesondere Kunststoffe oder Elastomere zum Einsatz kommen, bei denen Weichmacher so gebunden sind, dass keine Migration eintritt oder die Kunststoffe von vornherein frei von Weichmachern sind. Beispielsweise sind die Weichmacher abweichend zu klassischen niedermolekularen Weichmachern ausgebildet, wobei es sich bei diesen Weichmachern oder Weichsegmenten um Oligomere oder Polymere handeln kann und diese in Form von Blends, Pfropf- oder Copolymeren gebunden sein können. Vorzugsweise handelt es sich um solche Weichsegmente, die chemisch an die Hartsegmente gebunden sind (Block- bzw. Pfropfcopolymere).

Beispielhaft einsetzbare Elastomerlegierungen sind EVAC/Polyvinylidenchlorid-Blends (Alcryn), NBR/PVC-Blends, Butyl- bzw. Halobutyl bzw. NBR bzw. EPDM/Propylen bzw. Ethylen bzw. Acrylnitril- bzw. ABS bzw. Polycarbonat bzw. PVC bzw. Polyvinylidenchlorid-Blends, Polyethylen/Polypropylen-Blends, thermoplastische Naturkautschuk/Propylen bzw. Ethylen bzw. Acrylnitril- bzw. ABS bzw. Polycarbonat bzw. PVC bzw. Polyvinylidenchlorid-Blends, Polyether/Propylen bzw. Ethylen bzw. Acrylnitril- bzw. ABS bzw. Polycarbonat bzw. PVC bzw. Polyvinylidenchlorid-Blends, Polyisobytylen/Propylen bzw. Ethylen bzw. Acrylnitril- bzw. ABS bzw. Polycarbonat bzw. PVC bzw. Polyvinylidenchlorid-Blends, Polybutadien bzw. Polyisopren/Propylen bzw. Ethylen bzw. Acrylnitril- bzw. PVC bzw. Polyvinylidenchlorid-Blends.

Das thermoplastische Material für die weiche Schicht kann beispielsweise ausgewählt sein aus folgenden Materialien:
- Styrol-Ethylen-Butylen-Styrol-Blockcopolymeren (SEBS),
- Styrol-Ethylen-Propylen-Styrol-Blockcopolymeren (SEPS),
- Styrol-Butylen-Styrol-Blockcopolymeren (SBS),
- Styrol-Styrol-Butylen-Styrol-Blockcopolymeren (SSBS),
- thermoplastischen Elastomeren auf Polyesterbasis (Polyesterelastomeren) (TPE-E),
- thermoplastischen Elastomeren auf Polyurethanbasis (Polyurethanelastomeren) (TPE-U),
- thermoplastischen Elastomeren auf Polyamidbasis (TPE-A),
- Polymerblends aus Ethylen/Propylen(Dien)-Copolymeren (EPDM) und Polypropylen (PP) (EPDM/PP-Blends), die ggf. partiell vulkanisiert bzw. vernetzt sind, vorteilhaft dynamisch, d. h. während des Extrudierens , vernetzt,
- thermoplastischen Elastomeren auf Polyolefinbasis (TPE-O), und
- Metallocen-Polyolefinen geringerer Härte.

Die genannten Materialien haben eine poröse oder geschlossene, nicht poröse Struktur.

Eine Härte eines eingesetzten Kunststoffes, insbesondere für eine weiche Schicht 10 oder innere Schicht 28 oder ein zweites Material 23, beträgt bspw.
- 10 bis 55 Shore A oder
- 20 bis 65 Shore A, bevorzugt 25 bis 55 Shore A,
- oder 15 bis 65 Shore A, bevorzugt 20 bis 55 Shore A.

Für eine härtere Schicht, beispielsweise den Griffkern 6, eine Griffkernummantelung 9 und/oder eine Außenschicht 11 (äußere Schicht 28; erstes Material 22) findet insbesondere ein Kunststoff Einsatz mit einer Härte zwischen 30 und 105 Shore A, vorzugsweise zwischen 30 bis 85 Shore A. Der Griffkern 6 wird vorzugsweise aus Hartkunststoff, zum Beispiel Polypropylen mit einer Kugeldruckhärte von 45 - 65 N/mm² oder Polyurethan, hergestellt.

Als Treibmittel können pulverförmige chemische Treibmittel auf der Basis von Azodicarbonsäurediamid (ADC), N-Nitrosverbindungen und Sulfonylhydrazide zum Einsatz kommen. Diese Treibmittel zersetzen sich unter Entwicklung von CO₂-Gas zwischen 100 und 250 °C. Ein bevorzugt für die Verarbeitung mit thermoplastischen Elastomeren verwendetes Treibmittel ist auf Basis von Azo-Verbindungen gebildet, beispielsweise im Wesentlichen bestehend aus Zitronensäure und Calciumcarbonat. Ein derartiges Treibmittel zersetzt sich bei Temperaturen im Bereich von 150 bis 200 °C.

Auch andere physikalische Treibmittel können eingesetzt werden. Diese bestehen aus in Kunststoff-Mikrokapseln eingeschlossenem Pentan. Bei Verarbeitungstemperatur schmelzen die Kapseln. Das Pentan vergast und bildet die Poren. Die Kombination chemischer und physikalischer Treibmittel ist ebenfalls möglich. Weiterhin denkbar ist die Einführung eines Gases, insbesondere CO₂, in einen Spritzzylinder der Spritzgießmaschine, wo es durch die Schnecke in die Masseschmelze eingearbeitet wird. Bei dem anschließenden Spritzvorgang wird die aufgeschäumte Masse in die Form eingespritzt.

Ebenfalls möglich ist, dass zumindest eine Schicht einen Füllstoff aufweist. Als mögliche Füllstoffe kommen ein Granulat wie ein Korkgranulat, Korkmehl, Holzmehl oder ein faserartiger Füllstoff wie Glasfasern in Betracht. Der Gewichtsanteil des Füllstoffs am Gesamtgewicht der beteiligten Schicht oder des beteiligten Bestandteils des Griffs liegt bspw. unter 50 %, insbesondere zwischen 5 und 30 %.

### III. Herstellungsverfahren

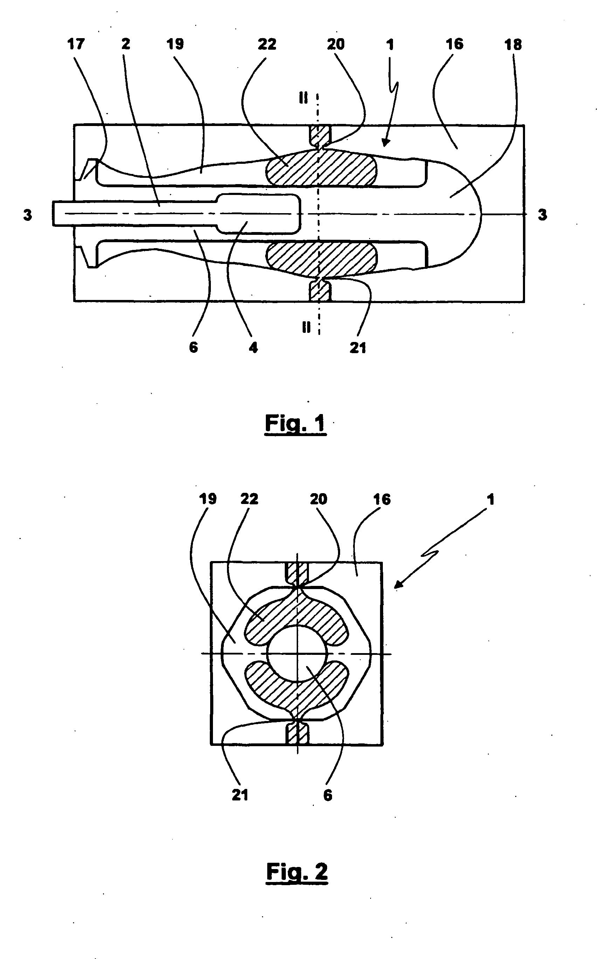

Fig. 1 bis 9 zeigen ein Herstellungsverfahren, welches auch als "Sandwichverfahren" oder "Intervallverfahren" bezeichnet wird, zur Herstellung zumindest von Teilschichten oder Bestandteilen des Griffs 1.

Ein mit einem ausgehärteten Griffkern 6 ummantelter Schaft 2 wird in eine Form 16 eingelegt, die in einer Mittenebene, die durch die Längsachse 3-3 verläuft, geteilt ist. Die Innenkontur der Form 16 entspricht im Wesentlichen der Form des fertigen Griffs 1. Für das in Fig. 1 bis 6 dargestellte Ausführungsbeispiel besitzt der Griffkern 6 Endbereiche 17, 18. Der Endbereich 17 ist dem Funktionsteil zugewandt und besitzt einen radial nach außen orientierten umlaufenden Bund, im Bereich dessen der Griffkern 6 die Form 16 unter radialer Abdichtung ausfüllt. Der dem Endbereich 17 gegenüberliegende Endbereich 18 bildet eine ungefähr kugelförmige Stirnseite des Griffs 1, im Bereich welcher der Endbereich 18 ebenfalls unter radialer Abdichtung an der Form 16 anliegt. Von einem zylinderförmigen Mittenbereich 26 des Griffkerns 6, ggf. mit zusätzlichen Rippen 8 o. ä., den Endbereichen 17, 18 und der Innenkontur der Form 16 ist eine in Umfangsrichtung um die Längsachse 3-3 umlaufende Kammer 19 begrenzt. Radial in die Kammer 19 münden zwei sich in Umfangsrichtung gegenüberliegende Eintrittsöffnungen oder Einspritzkanäle 20, 21 (im Folgenden "Eintrittsöffnungen"), die vorzugsweise im Bereich der maximalen radialen Erstreckung der Kammer 19 und damit des späteren Griffs 1 angeordnet sind. Über die Eintrittsöffnungen 20, 21 wird in die Form 16 und die Kammer 19 zunächst ein erstes Material 22 eingespritzt. Das Volumen des eingespritzten ersten Materials 22 ist kleiner als das der Kammer 19. Das erste Material 22 wird auf die Mantelfläche des Griffkerns 6 aufgespritzt und/oder in Richtung der die Formkavität begrenzenden Wandung umgelenkt und von dieser abgekühlt, so dass benachbart dem Griffkern 6 oder im Bereich der die Formkavität begrenzenden Wandung das erste Material 22 schneller aushärtet oder dickflüssiger wird als in anderen Teilbereichen.

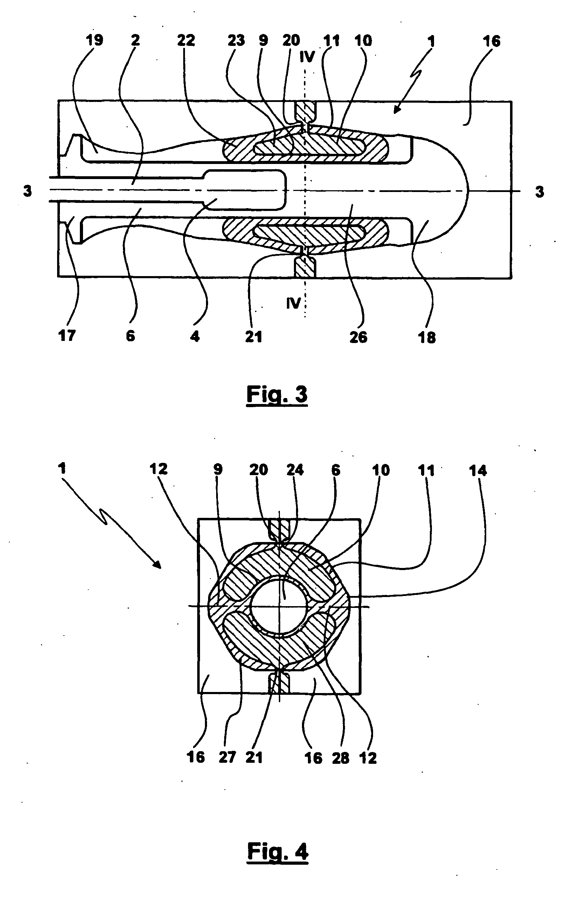

Anschließend und vor einem endgültigen Aushärten des ersten Materials 22 wird gemäß Fig. 3 und 4 über dieselben Eintrittsöffnungen 20, 21 ein zweites Material 22 in die Kammer 19 und in das erste Material 22 eingespritzt. Von den Eintrittsöffnungen 20, 21 fließt das zweite Material 23 durch einen radialen Kanal 24 in das Innere des ersten Materials 22 . Mit zunehmendem Einspritzen des zweiten Materials 23 wird das erste Material 22 räumlich in Richtung der Längsachse 3 und in Richtung der Endbereiche 17, 18 und radial zu der Wand der Formkavität verdrängt, wobei das zweite Material 23 bis auf den genannten Kanal sowohl radial nach außen als auch radial nach innen als auch in beide axiale Richtungen von dem ersten Material 22 ummantelt ist. Infolge des vorherigen Abkühlens des ersten Materials 22 im Kontaktbereich mit dem Griffkern 6 gelangt das zweite Material 23 nicht bis zu dem Griffkern 6. Da das erste Material in seiner Randschicht bereits etwas kühler ist als das zweite Material, wird die Randschicht nicht mehr von dem zweiten Material durchbrochen. Das zweite Material 23 drängt das erste Material 22 auch radial nach außen, so dass dieses die Außenschicht 11 oder äußere Schicht 27 bildet. Neben der beschriebenen Verdrängungsbewegung in axialer Richtung breitet sich das zweite Material 23, umgeben von dem ersten Material 22, von den beiden Eintrittsöffnungen 20, 21 um den Griffkern 6 in Umfangsrichtung aus, so dass sich entgegengerichtete Materialflüsse schließlich berühren. Da die Außenschicht des Materials 22 bereits etwas abgekühlt ist, wird sie nicht mehr von dem Material 23 durchbrochen oder verflüssigt, sondern die Außenschichten des Materials 22 der sich berührenden Materialflüsse verschmelzen und bilden dabei in ungefähr einer Ebene zu beiden Seiten des Griffkernes Wände, die als radiale Stege oder Rippen 12 des ersten Materiales 22 verbleiben und die eine sich um den Griffkern bildende Schicht aus dem ersten Material 22, einer Griffkernummantelung 9, sowie eine Außenschicht 11 oder äußere Schicht 27, ebenfalls aus dem ersten Material 22, einstückig verbinden. Diese sich auch in Längsrichtung um die Griffkernummantelung 9 bildenden Stege 12 erhöhen die Torsionssteifigkeit des Griffes und unterstützen die Übertragung eines Drehmomentes von der Außenschicht 11 auf den Griffkern 6.

Die gewählten Temperaturbedingungen, Viskositäten und Einspritzgeschwindigkeiten für das Spritzgussverfahren werden geeignet so angepasst, dass sich infolge einer derartigen Annäherung in Umfangsrichtung die Teilbereiche nicht schließen können, sondern zwischen den Teilbereichen noch in radialer Richtung durchgehende Rippen 12 oder radial nicht durchgehende Rippen 13 verbleiben.

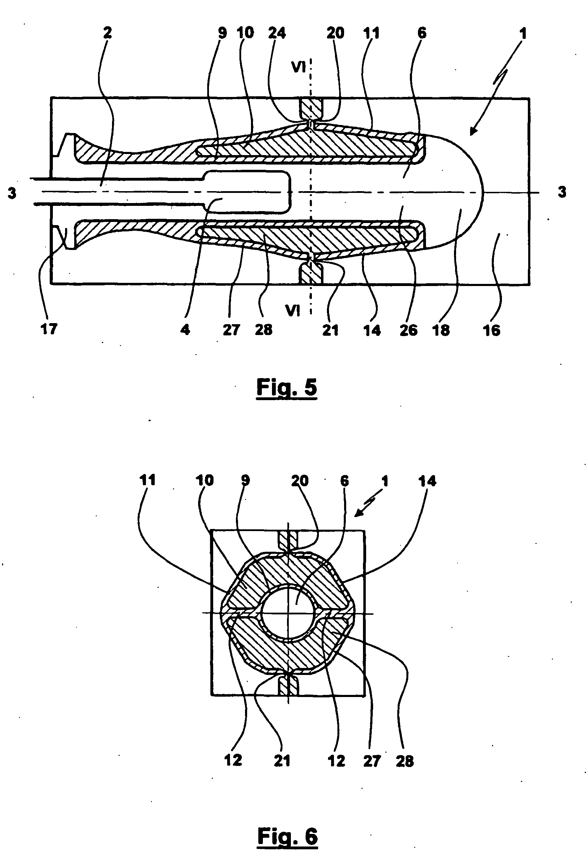

Mit Abschluss des Einspritzens des zweiten Materials 23 ist die Kammer 19 vollständig gefüllt. Der Kanal 24 kann mit Beendigung der Herstellung des Griffs 1 weiterhin mit dem zweiten Material gefüllt sein. Alternativ ist es möglich, dass am Ende des Herstellungsverfahrens nochmals eine geringe Menge des ersten Materials 22 eingespritzt wird, die den Kanal 24 und die Einspritzöffnung im Griff mit dem ersten Material 22 füllt und verschließt. Für das dargestellte Ausführungsbeispiel des Herstellungsverfahrens befinden sich die Eintrittsöffnungen 20, 21 in 12-Uhr-Position sowie in 6-Uhr-Position, s. Fig. 6, während sich die Rippen 12 in 3-Uhr-Position sowie 9-Uhr-Position erstrecken. Mit dem zweiten Material 23 ist die weiche Schicht 10 oder innere Schicht 28 gebildet. Die radiale Erstreckung der erstellten Griffkernummantelung 9 sowie der Außenschicht 11 ist geringer als die der weichen Schicht 10, und beträgt insbesondere weniger als ¹/₃, ¹/₅, ¹/₈ oder ¹/₁₀ der radialen Erstreckung der weichen Schicht 10.

Abgesehen von der Vorgabe bestimmter Dicken der Schichten 27, 28 durch Vorwahl der eingespritzten Volumina kann die Dicke der äußeren Schicht 27 auch durch die Temperatur der Wand der Formkavität (oder die Temperaturdifferenz zwischen der Wandung und dem eingespritzten Material) beeinflusst werden. Bei einer niedrigen Temperatur kühlt die Randschicht des eingespritzten ersten Materials schneller ab als bei höherer Temperatur. Infolgedessen wird die Dicke der äußeren Schicht 27 bei niedrigerer Temperatur größer als bei höherer Temperatur, bei ansonsten gleichen Parametern des Spritzvorganges.

Der Einsatz des Verfahrens erfordert Spritzgießmaschinen mit zwei Spritzgießeinheiten, die die Schmelzen der unterschiedlichen Komponenten für das erste Material 22 und das zweite Material 23 liefern und durch ein spezielles Maschinen-Steuerprogramm und besondere Ventilmechanismen an den Maschinen die schnelle, genau dosierte Abfolge der in die Form 16 eingespritzten Materialien 22, 23 bewirken. Es wurde überraschend gefunden, dass über.die Anzahl und Lage der Einspritzöffnungen 20, 21 sowie die Einspritzgeschwindigkeiten und - drücke, die Schmelzetemperaturen und die Temperaturen von Form und Griffkern die Dimensionen der Griffkernummantelung 9, der weichen Schicht 10, der Außenschicht 11, der Rippen 12 und der axialen Erstreckung beeinflusst werden können.

Bei einem Griff für Schraubendreher einer Größe von 105 mm sind für ein nicht beschränkendes Ausführungsbeispiel folgende Einspritzparameter eingesetzt worden:

| | |
|---|---|
| Einspritzdruck beim Einspritzen des ersten Materials 22: | 800 bar |
| Einspritzvolumenstrom des ersten Materials 22: | 40 ccm/s |
| Einspritzdruck-Profil über vier Punkte fallend geregelt Schmelzetemperatur: | 160-240 °C in den vier Zonen |
| Einspritzdruck beim Einspritzen des zweiten Materials 23: | 1.000 bar |
| Einspritzvolumenstrom des zweiten Materials 23: | 50 ccm/s |
| Einspritzdruck-Profil über vier Punkte fallend geregelt Schmelzetemperatur: | 160-240 °C in den vier Zonen |

Die vorgenannten Parameter können je nach Form des Griffs, Formauslegung, Typ der verwendeten Kunststoffe und Maschinensystem erheblich nach oben oder unten abweichen, insbesondere um 20 % oder 10 %.

Abweichend zu der dargestellten Ausführungsform mit zwei Eintrittsöffnungen 20, 21 kann eine beliebige andere Zahl von Eintrittsöffnungen in axialer Richtung und / oder in Umfangsrichtung verteilt werden, wobei u. U. bei mehreren Eintrittsöffnungen 20, 21 in axialer Richtung auch Stege durch sich in axialer Richtung aufeinander zu bewegende Förderströme entstehen können, so dass dann die Stege auch in Umfangsrichtung umlaufend ausgebildet sein können. Für die in Umfangsrichtung umlaufenden Förderströme bilden sich die Rippen 12 insbesondere zwischen benachbarten Eintrittsöffnungen aus, so dass beispielsweise bei drei in Umfangsrichtung verteilten Eintrittsöffnungen drei Rippen 12 ausgebildet werden. Neben der symmetrischen Anordnung der Eintrittsöffnungen 20, 21 gemäß Fig. 1 bis 6 ist es ebenfalls möglich, dass die Eintrittsöffnungen unsymmetrisch angeordnet sind, wodurch sich auch unsymmetrische Rippen 12 ergeben können, die dann ein unsymmetrisches Steifigkeitsverhalten des Griffs 1 zur Folge haben. Eine Verschiebung der Lage der Rippen kann auch durch unterschiedliche Geschwindigkeiten und/oder Drücke beim Einspritzen durch die Eintrittsöffnungen erreicht werden.

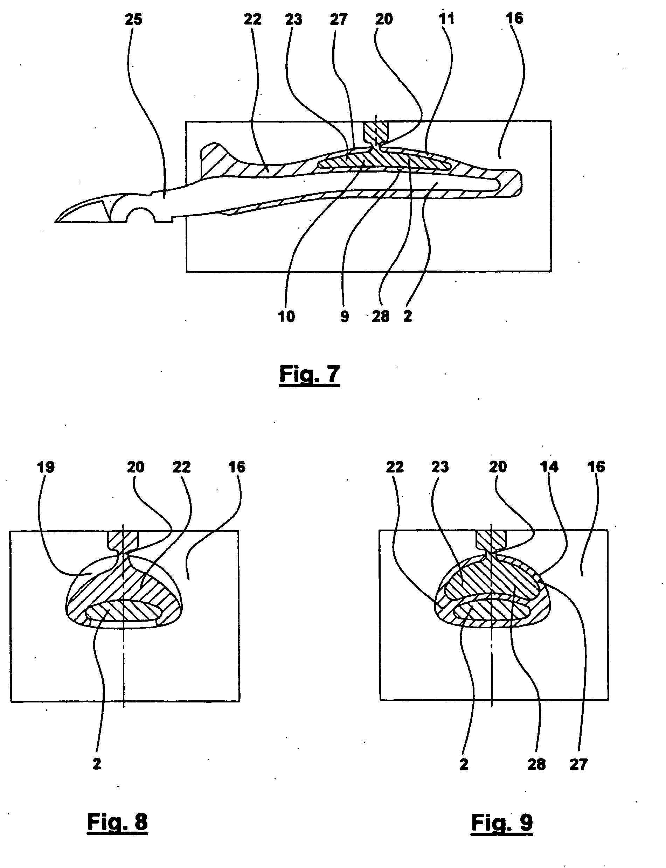

Fig. 7 bis 9 zeigen den nicht vom Worflaut der Patentansprüche umfassten Einsatz des zuvor erläuterten Herstellungsverfahrens für die Herstellung eines Griffs für einen Zangenschenkel 25 einer Zange 50. Für eine derartige Ausführungsform des Griffs 1 ist kein Griffkern 6 vorhanden, so dass eine Griffkernummantelung 9 unmittelbar auf einem Schaft 2 des Zangenschenkels 25 angeordnet ist. Lediglich eine Eintrittsöffnung 20 ist auf der außenliegenden Seite des Zangenschenkels 25 angeordnet. Für das dargestellte Herstellungsverfahren werden die Einspritzbedingungen für die Materialien 22, 23 derart angepasst, dass sich das zweite Material 23, welches die weiche Schicht 10 (innere Schicht 28) bildet, lediglich über einen Teilumfangsbereich um den Schaft 2 erstreckt. Somit bildet das erste Material 22 innenliegend von der Mantelfläche 14 einen in erster Näherung 8-förmigen Querschnitt (mit abgerundeter Außenkontur) aus mit zwei in Richtung nach außen nebeneinander liegenden Kammern, wobei in der inneren Kammer der Schaft 2 angeordnet ist, während die außenliegende Kammer mit dem zweiten Material 23 gefüllt ist. Für den Griff 1 für einen Einsatz bei einer Zange erstreckt sich das zweite Material 23 lediglich in dem Bereich des Griffs 1, der einen vergrößerten Querschnitt besitzt für die Anlage einer Hand des Benutzers und sich ungefähr über ein Drittel bis zwei Drittel der Längserstreckung des Griffs 1 erstreckt. Hier bildet die weiche Schicht 10 (innere Schicht 28) mit dem zweiten Material 23 eine Art elastisches Kissen, während das härtere erste Material 22 eine belastbare Verbindung zum Zangenschenkel 25 ausbildet.

Für ein alternatives Herstellungsverfahren wird der Griff 1 mit zumindest zwei Bestandteilen gefertigt, wobei ein radial außenliegend in dem Griff 1 angeordneter Bestandteil mit einer inneren Ausnehmung hergestellt wird, im Bereich dessen ein Fügen des Bestandteils mit einem radial innenliegenden Bestandteil möglich ist. Über Rippen 5, 8, 12, 13 kann trotz der u. U. nicht stoffschlüssigen Verbindung eine Übertragung eines Torsionsmoments zwischen den Bestandteilen erfolgen. Ebenfalls möglich ist die Herstellung einer stoffschlüssigen Verbindung nach oder mit einem Fügen der mindestens zwei Bestandteile. Eine Sicherung der Bestandteile kann nach einem Fügen der Bestandteile auch über eine reibschlüssige oder formschlüssige Verbindung, eine elastische Rastverbindung oder eine Sperrverbindung erfolgen. Der außenliegende Bestandteil kann hierbei mit dem zuvor erläuterten Sandwichverfahren gefertigt werden.

### IV. Beispielhafte weitere Ausführungsformen von Griffen für Werkzeuge

Die folgenden Ausführungsformen lassen sich mit zuvor unter III. erläuterten Herstellungsverfahren herstellen, wobei die unter I aufgezählten möglichen Ausgestaltungen und Alternativen auf die folgenden Ausführungsformen übertragbar sind und für sämtliche Bestandteile und Schichten die Ausführungen zu den Materialen gemäß II. alternative Möglichkeiten für eine Ausgestaltung bieten.

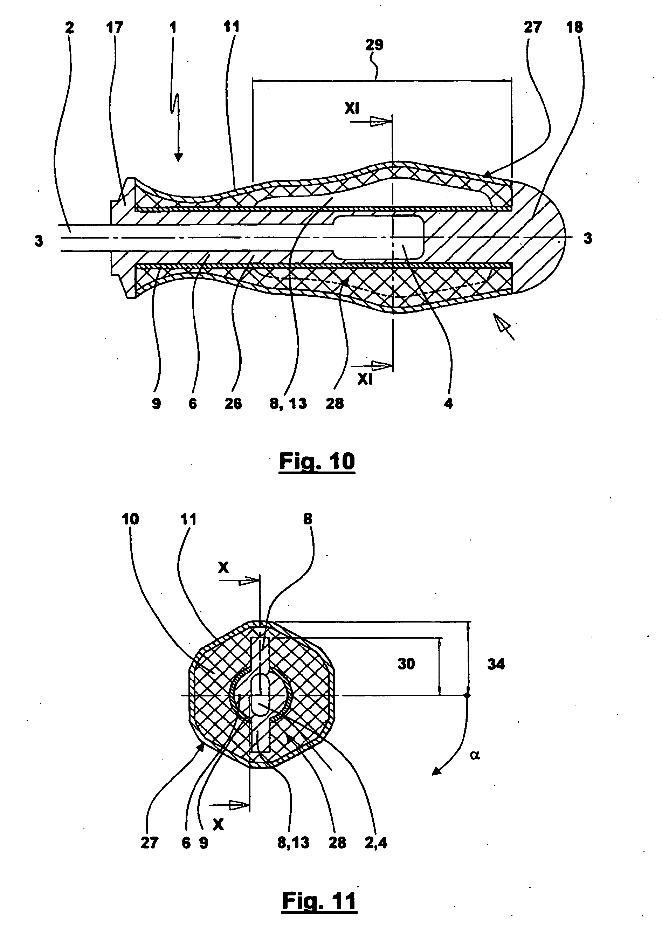

Der Griff in der in Fig. 10 und 11 dargestellten Ausführungsform ist wie folgt aufgebaut: ein Schaft 2 ist von einem Griffkern 6 ummantelt, der Endbereiche 17, 18 sowie einen Mittenbereich 26 besitzt. Der Mittenbereich 26 besitzt eine im Wesentlichen zylinderförmige Mantelfläche, die von einer Griffkernummantelung 9 ummantelt ist. Von dem Griffkern 6 erstrecken sich, einstückig von diesem ausgebildet, Rippen 8 durch die Griffkernummantelung 9 hindurch, wobei für den in Fig. 11 dargestellten Querschnitt die Rippen 8 in 12-Uhr-Position sowie 6-Uhr-Position angeordnet sind. Die Rippen 8 und die Griffkernummantelung 9 sind von einer weichen Schicht 10 in Umfangsrichtung durchgehend ummantelt, wobei die weiche Schicht 10 wiederum von einer Außenschicht 11, die in Umfangsrichtung umlaufend ausgebildet ist und die Mantelfläche 14 bildet, ummantelt ist. Die weiche Schicht 10 bildet eine innere Schicht 28 aus einem weichen Kunststoff, an der außenliegend mit der Außenschicht 11 eine äußere härtere Schicht 27 stoffschlüssig angebunden ist. Eine zusätzliche Schicht 9 aus dem ersten Material 22 und damit dem Material der äußeren Schicht 27 bildet eine Griffkernummantelung 9. An den Griffkern 6 sind Rippen 8 einstückig angesetzt. In dem in Fig. 10 dargestellten Längsschnitt ist zu erkennen, dass die Außenkontur der Rippen 8 parallel zu der Außenkontur der Mantelfläche 14 verläuft, so dass die radiale Erstreckung der inneren Schicht 28 des Griffes 1 in Richtung der Längsachse 3-3 ungefähr konstant ist. Die Rippen 8 erstrecken sich lediglich über einen axialen Teilbereich der äußeren Schicht 27, so dass in einem vorderen Bereich des Griffs 1 die äußere Schicht 27 unmittelbar stoffschlüssig an die Griffkernummantelung 9 angebunden ist. Die Rippen 8 können, wie in Fig. 11 skizziert, gegenüberliegend angeordnet sein oder abweichend in nicht dargestellter Weise in Umfangsrichtung versetzt angeordnet sein. In der dargestellten Ausführungsform haben die Rippen 8 einen rechteckigen Querschnitt, wobei diese abweichend auch eine beliebige andere Form haben können, etwa leicht nach außen zulaufend, an der Oberkante abgerundet oder in der Dicke auch geringer ausgebildet sein können.

Für die äußere Schicht 27 oder Außenschicht 11 hat sich die Verwendung eines Kunststoffes mit einer Härte von 30 bis 85 Shore A, vorzugsweise von 40 bis 60 Shore A als zweckmäßig erwiesen - für die weiche Schicht 10 oder innere Schicht 28 eine Härte von 10 bis 55 Shore A, vorzugsweise von 15 bis 30 Shore A. Es können Kunststoffe gleichen Typs oder verschiedener Typen verwendet werden, sofern diese eine gute stoffliche Verbindung miteinander eingehen. U. U. ist auch für eine gute stoffschlüssige Verbindung zwischen einer Oberkante der Rippe 8 und der äußeren Schicht 27 Sorge zu tragen.

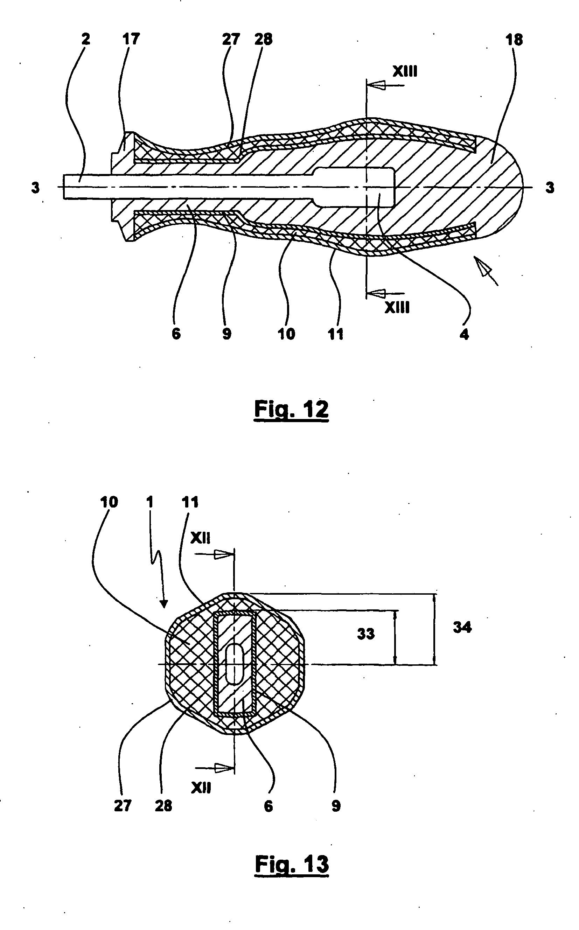

Fig. 12 und 13 zeigen weitere Ausführungsform eines Griffs 1, bei der bei ansonsten Fig. 10 und 11 entsprechender Ausgestaltung der Griffkern 6 ohne Rippen 8 ausgebildet ist. Stattdessen ist zumindest in einem Teilbereich der Griffkern 6 mit einem ungefähr rechteckförmigen Querschnitt gebildet ist, der in Umfangsrichtung vollständig von der Griffkernummantelung 9 umgeben ist. Ein derartiger rechteckiger Querschnitt des Griffkerns 6 erstreckt sich ungefähr über die Längserstreckung 29, vorzugsweise mit variierendem Verhältnis der Länge zur Breite des Rechtecks bzw. abnehmender Länge des Rechtecks.

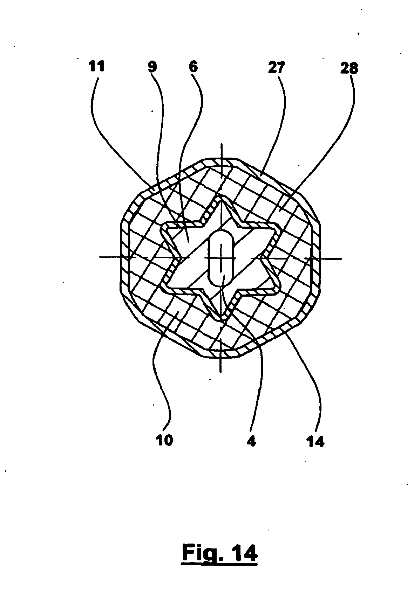

Für ein in Fig. 14 dargestelltes weiteres Ausführungsbeispiel eines Griffs 1 ist die innere Schicht 28, die mit der weichen Schicht 10 gebildet ist, sternförmig mit sechs Zacken entsprechend einer derartigen Außenkontur des Griffkerns 6 und der Griffkernummantelung 9 ausgebildet. Die innere Schicht 28 besitzt in den Positionen 12 Uhr, 2 Uhr, 4 Uhr, 6 Uhr, 8 Uhr, 10 Uhr eine maximale radiale Erstreckung.

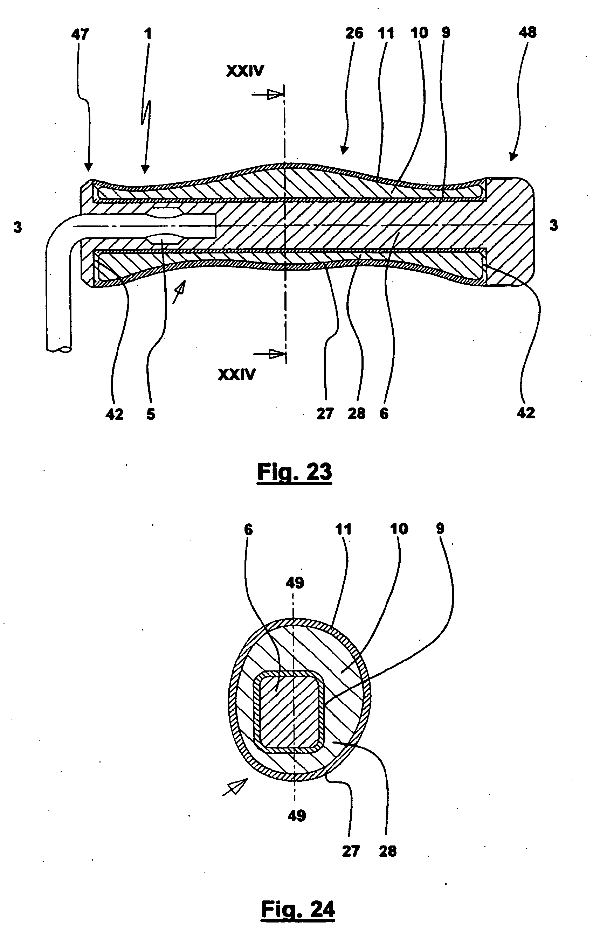

Ebenfalls denkbar ist eine Ausgestaltung einer Mantelfläche 14 und des Aufbaus des Griffs 1 auf unsymmetrische Weise, wie beispielsweise bei dem Griff für eine Kelle, s. a. Fig. 23 und 24. Bei derartigen Griffen wird der Griffkern 6 zweckmäßigerweise über seine Längserstreckung im Wesentlichen gleich gehalten. Es ist aber vorteilhaft, die Querschnitts-Kontur unrund zu gestalten, entweder in der Grundform des Querschnitts oder durch sich radial erstreckende Ansätze oder Rippen im Griffkern 6. Auch wenn mit derartigen Griffen in der Regel nicht derart hohe Torsionsmomente übertragen werden müssen wie bei einem Schraubendreher, ist eine gewisse Aussteifung des Griffs in radialer Richtung zweckmäßig.

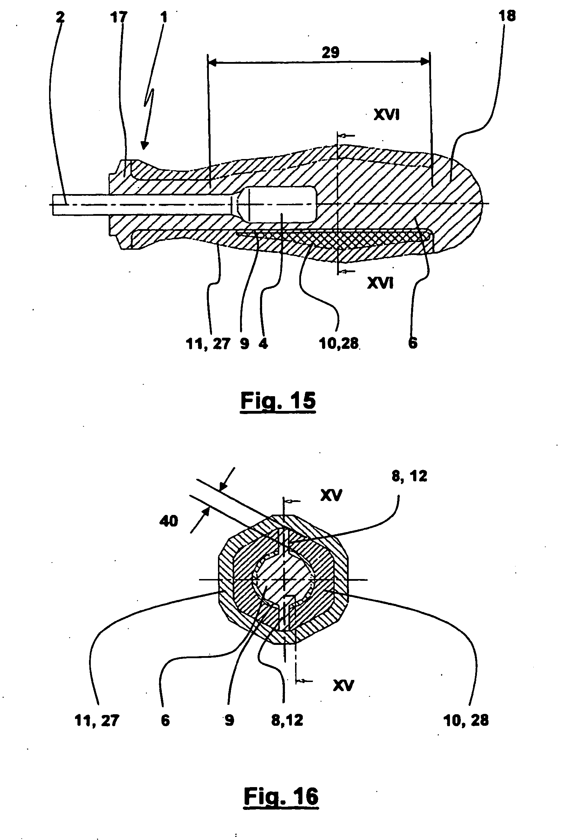

Fig. 15 und 16 zeigen ein Ausführungsbeispiel, für welches sich Rippen 8, 12 durch die innere Schicht 28 hindurch erstrecken. Die von dem Griffkern 6 ausgebildeten Rippen 8, 12 sind im Bereich ihrer Stirnseiten stoffschlüssig an die Außenschicht 11 oder äußere Schicht 27 angebunden und stellen damit eine unmittelbare und steife Verbindung zwischen Außenschicht 11 und dem ansonsten runden Querschnitt des Griffkerns 6 dar. Das Beispiel zeigt eine dickere Außenschicht 11 oder äußere Schicht 27, wie sie durch stärkere Kühlung der Wand der Formkavität erreicht wird. Insbesondere beträgt die radiale Erstreckung 41 der äußeren Schicht 27 30 % bis 100 % der radialen Erstreckung 40 der inneren Schicht 28, gemessen an der Stelle des größten Durchmessers des Griffs 1.

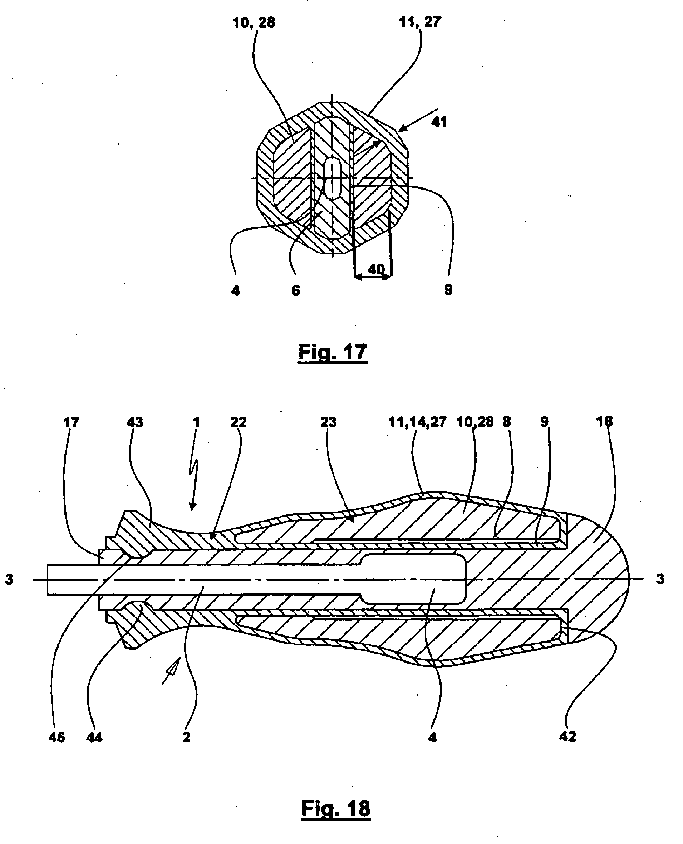

Fig. 17 zeigt eine Ausführungsform eines Griffs 1, welche im Wesentlichen der in den Fig. 15 und 16 dargestellten Ausführungsformen entspricht, allerdings in diesem Fall mit einem Griffkern 6 mit rechteckigem Übertragungsquerschnitt 7, der stoffschlüssig an die Außenschicht 11 und äußere Schicht 27 angebunden ist.

Fig. 18 zeigt ein Ausführungsbeispiel eines Griffs, bei dem ein Griffkern 6 mit Endbereichen 17, 18 ausgebildet ist, wobei der Endbereich 18 eine Kappe zur Aufbringung von Axialkräften durch eine Hand des Benutzers bildet. Der Griffkern 6 besitzt sechs gleichförmig über den Umfang verteilte Rippen 13. Für das dargestellte Ausführungsbeispiel sind die Außenschicht 11 (äußere Schicht 27) und die Griffkernummantelung 9 über einen radialen Steg 42, der für das dargestellte Ausführungsbeispiel in Umfangsrichtung umlaufend ausgebildet ist als kreisringförmiger Bund, miteinander verbunden, so dass mit der Griffkernummantelung 9, dem Steg 42 und der Außenschicht 11 im Halblängsschnitt ein liegendes, nach vorne offenes U gebildet ist. Der innenliegende Schenkel des U, welcher die Griffkernummantelung 9 bildet, ist kürzer ausgebildet als der außenliegende, die Mantelfläche 14 bildende Schenkel, der insbesondere ungefähr mit der Längserstreckung 29 ausgebildet ist. Die Griffkernummantelung 9 ist von den Rippen 8, 13 durchsetzt. Zwischen Griffkernummantelung 9 und Außenschicht 11 ist eine weiche Schicht 10 angeordnet, die eine innere Schicht 28 bildet. Der Griffkern 6 ist aus einem harten Kunststoff gebildet, der eine erste Steifigkeit definiert. Mit den Endbereichen 17 und 18 liegt während einer Fertigung des Griffs 1 der Griffkern 6 dichtend an der Wand einer Formkavität an, wenn die Griffkernummantelung 9 und die weiche Schicht 10 hergestellt werden durch Aufspritzen auf den Griffkern 6. Die Außenschicht 11 besitzt eine dritte Steifigkeit, während die weiche Schicht 10 eine zweite Steifigkeit besitzt. Die zweite und dritte Steifigkeit sind mit einem elastischen Kunststoff mit unterschiedlicher Härte gebildet, wobei der für die dritte Steifigkeit verwendete Kunststoff eine höhere Härte besitzt als der zur Bereitstellung der zweiten Steifigkeit verwendete Kunststoff. Bei Beaufschlagung des Griffs 1 mit einer Handkraft verformen sich die Außenschicht 11 und die weiche Schicht 10 räumlich und passen sich der Höhlung der auf den Griff 1 einwirkenden Hand an, so dass eine optimale Kopplung von Griff und Hand erreicht werden kann. Auf diese Weise erfolgt auch eine Adaption des Griffs 1 an unterschiedliche Hände unterschiedlicher Benutzer. Griffkern 6, Griffkernummantelung 9, weiche Schicht 10 und Außenschicht 11 sind - durch entsprechende Auswahl der verwendeten Kunststoffe - stofflich durch Verschweißen beim Spritzvorgang miteinander verbunden. Zusätzlich - insbesondere bei Griffen, mit denen ein Torsionsmoment übertragen werden muss - erfolgt ein Formschluss zwischen den Rippen 8, 13 und der Griffkernummantelung 9 und dem innenliegenden Bereich der weichen Schicht 10. Da die Griffkernummantelung 9 eine höhere Härte besitzt als die weiche Schicht 10 und mit der Oberfläche des Griffkerns 6 stoffschlüssig verbunden ist, trägt die Griffkernummantelung 9 wirkungsvoll zur Übertragung eines Torsionsmoments bei.

Eine Fertigung des Griffs 1 erfolgt derart, dass zunächst der Griffkern 6 in einer ersten Spritzgießform gefertigt wird, wobei der Schaft 2 in den Griffkern 6 eingegossen wird. In einer zweiten Spritzgießform werden die Griffkernummantelung 9, die weiche Schicht 10 und die Außenschicht 11 auf den in die Form eingelegten Griffkern 6 aufgespritzt gemäß dem Intervall-Sandwichverfahren. Zuerst wird das die Griffkernummantelung 9, den Steg 42 und die Außenschicht 11 (äußere Schicht 27) bildende erste Material 22 in die Form eingespritzt und unmittelbar danach vor einem Aushärten die die weiche Schicht 10 (innere Schicht 28) bildende Kunststoffmasse, das zweite Material 23, eingespritzt. Das zweite Material 23 verdrängt das zuerst eingespritzte, noch (teilweise) flüssige erste Material 22 an die Wandung der Formkavität bzw. an die Wandung des Griffkerns 6, wodurch die Griffkernummantelung 9, der Steg 42 und die Außenschicht 11 ausgebildet werden. Durch einen derartigen Verfahrensablauf wird erreicht, dass sich an der Oberfläche des Griffs 1 die Außenschicht 11 als dichte Schicht ausbilden kann. Die Dicke dieser Schicht kann durch den Verfahrensablauf, beispielsweise das Verhältnis und die Dosierungsmengen der Materialien 22, 23 und/oder die Parameter des Spritzgießvorgangs gesteuert werden. Die Dicke der Schicht wird in jedem Fall so eingestellt, dass eine radiale Verformbarkeit der Außenschicht 11 und der weichen Schicht 10 bei Einwirken einer Kraft durch die den Griff 1 umschließende Hand beim Arbeiten nicht gemindert wird, aber andererseits eine gute Übertragung eines eingeleiteten Torsionsmoments gewährleistet ist, wie es z. B. bei Verwendung eines derartigen Griffs für einen Schraubendreher erforderlich ist. Es wurde gefunden, dass eine Schichtdicke von ungefähr 0,5 bis 2,5 mm zweckmäßig ist für die Außenschicht 11, wobei die Dicke im Verlauf der Mantelfläche 14 variieren kann. Für die Ausbildung der Außenschicht 11 wird vorteilhafterweise eine Qualität bzw. Kunststoffart verwendet, die eine für den Anwendungszweck ausreichende Beständigkeit gegenüber Chemikalien, Fetten oder Ölen hat. Eine derartige Beständigkeit müssen die für die weiche Schicht 10 verwendeten Kunststoffarten nicht zwingend besitzen, wodurch u. U. Kosten gespart werden können. Eine Paarung der Materialien 22, 23 in Härte und Art oder Typ wird derart gewählt, dass diese zum einen eine gute stoffliche Verbindung miteinander und mit dem Griffkern 6 eingehen und zum anderen eine gewünschte Verformbarkeit gewährleistet ist.

Eine Herstellung eines derartigen Griffs 1 kann alternativ durch separate Herstellung
- eines Bestandteils einer Art Griffhülse mit dem Endbereich 43, der Griffkernummantelung 9, der weichen Schicht 10 (innere Schicht 28) und der Außenschicht 11 (äußere Schicht) sowie
- eines weiteren Bestandteils mit dem mit dem Griffkern 6 ummantelten Schaft 2 erfolgen. Hierbei wird in den erstgenannten Bestandteil eine zentrale, in Richtung der Längsachse 3-3 verlaufende Höhlung eingeformt, bspw. mit einem entsprechenden Formkern, die einen unrunden Querschnitt aufweisen kann zur Herstellung einer formschlüssigen Verbindung mit einer entsprechenden Mantelfläche des Griffkerns 6, beispielsweise zur Aufnahme von Rippen 8, 13. Alternativ kann die Höhlung einen Sechskantquerschnitt oder einen runden Querschnitt mit eingeformten, in Längsrichtung verlaufenden Taschen besitzen. Um den Formkern zur Herstellung der Höhlung bildet sich, wie zuvor beschrieben, die Griffkernummantelung 9 aus Kunststoff mit höherer Härte aus, die aus dem ersten Material 22 besteht. Der Griffkern 6 besitzt einen korrespondierenden Querschnitt, also insbesondere ebenfalls einen Sechskantquerschnitt oder einen runden Querschnitt mit radial aufgesetzten Rippen 8, 13, die in die Taschen des ersten Bestandteils eingreifen. Über die unrunden Querschnitte kann ein Torsionsmoment übertragen werden. Die Maße und Toleranzen der beiden Querschnitte sind so aufeinander abgestimmt, dass der erste Bestandteil straff passend auf den Griffkern 6 aufgeschoben werden kann. Zweckmäßigerweise können die beiden Bestandteile zusätzlich miteinander verklebt werden. Der Endbereich 43 besitzt über den Umfang verteilte Nasen 44 oder einen umlaufenden Ansatz, der in einer Rastverbindung formschlüssig in einer zugeordneten Nut 45 des Griffkerns 6 aufgenommen ist. Eine derartige Schnappverbindung mit den Nasen 44 und der Nut 45 führt zu einer (u. U. auswechselbaren) axialen Sicherung. Selbstverständlich kann eine Schnappverbindung auch auf andere Weise ausgebildet sein oder eine axiale Sicherung anderer Art vorgesehen sein.

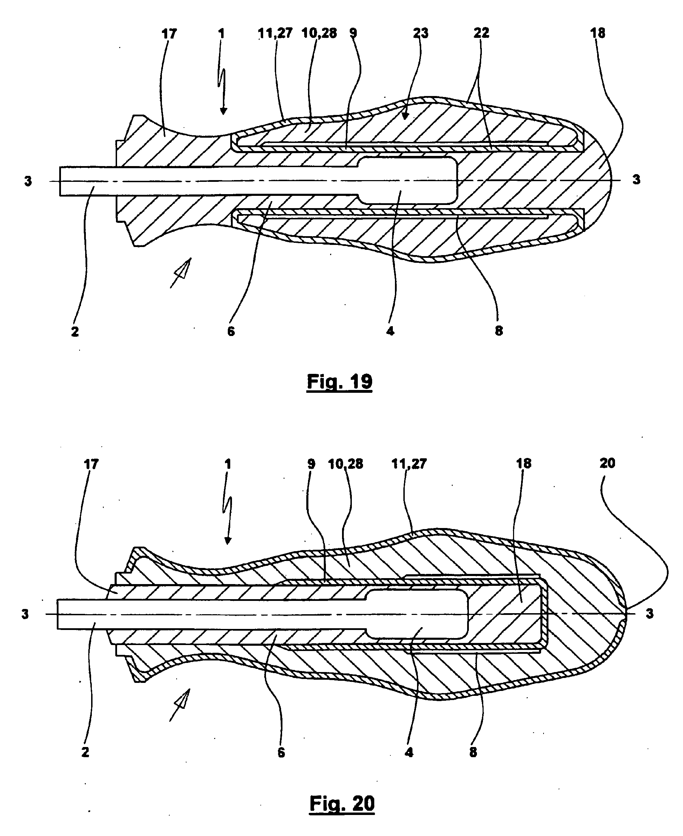

Bei einer in Fig. 19 dargestellten Ausführungsform eines Griffs 1 ist die Mantelfläche 14 mit den radial erweiterten Endbereichen 17, 18 des Griffkernes 6 gebildet. Zwischen den Endbereichen ist ein elastischer Teil des Griffs 1 angeordnet, der mit einer weichen Schicht 10 (innere Schicht 28) sowie einer im Längsschnitt geschlossenen Ummantelung der weichen Schicht 10 mit der Griffkernummantelung 9 und der Außenschicht 11 (äußere Schicht) gebildet ist. Dieses elastische Griffteil kann entweder zunächst als eigenes Spritzgießteil - ebenfalls im Sandwichverfahren - gefertigt werden und unter elastischer Aufweitung von hinten über den Endbereich 18 auf den Griffkern 6 aufgesteckt werden oder das Griffteil wird im Sandwichverfahren direkt auf den Griffkern 6 aufgespritzt, wie dieses bereits für vorangegangene Ausführungsformen beschrieben worden ist.

Für das in Fig. 20 dargestellte Ausführungsbeispiel ist in dem Griff 1 der Griffkern 6 nicht durchgehend bis zum Ende des Griffs 1 ausgebildet. Vielmehr ist der Endbereich 18 des Griffkerns 6 ebenfalls von der Griffkernummantelung 9, der weichen Schicht 10 (innere Schicht 28) und der Außenschicht 11 (äußere Schicht 27) ummantelt, so dass die Außenschicht 11 auch die stirnseitige Mantelfläche oder die Kappe bildet. Bei einem Griff gemäß diesem Ausführungsbeispiel ist es zweckmäßig, zumindest eine oder eine einzige Eintrittsöffnung 20 zentral am Ende des Griffes 1 anzuordnen.

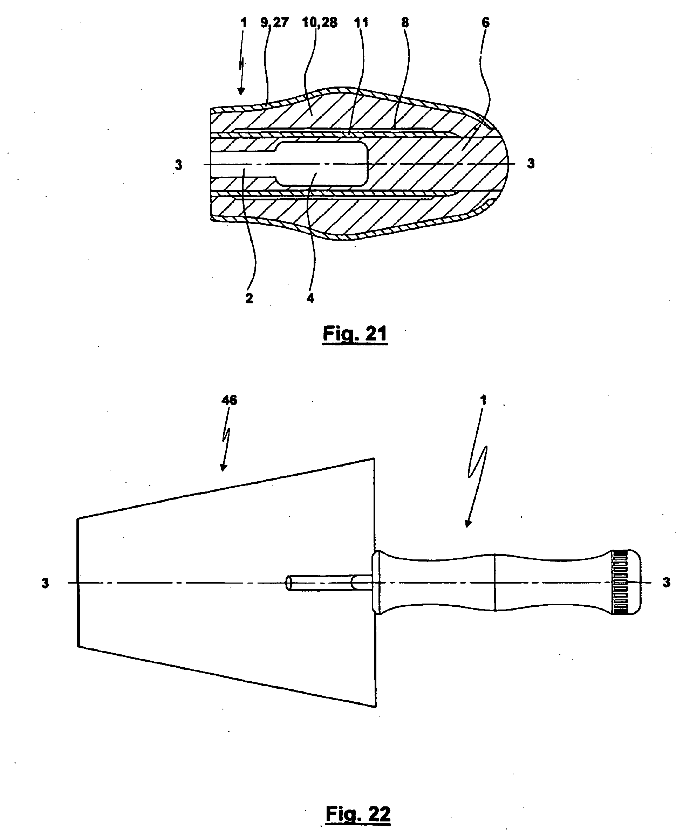

Für das in Fig. 21 dargestellte Ausführungsbeispiel ist der Griffkern 6 ohne radiale Verdickung im Endbereich 18 bis zum Endbereich des Griffs 1 durchgeführt.

Für die in den Fig. 18 bis 21 dargestellten Ausführungsbeispiele ist die weiche Schicht 10 oder innere Schicht 28 insbesondere mit einem zweiten Material 23 in Form eines Kunststoffes in geschlossener Struktur mit einer Härte von 10 bis 45 Shore A ausgebildet. Alternativ kann die weiche Schicht 10 mit einer porösen Struktur gebildet sein, deren Ausgangshärte 20 bis 80 Shore A ist. Für die Außenschicht 11 (äußere Schicht 27) und/oder die Griffkernummantelung 9 findet ein erstes Material in Form eines Kunststoffes Einsatz mit einer Härte von 30 bis 105 Shore A, insbesondere 30 bis 85, vorzugsweise 40 bis 60 Shore A. Die radiale Erstreckung der weichen Schicht 10 ist größer als die der Außenschicht 11 und/oder der Griffkernummantelung 9. Die Dicke der Griffkernummantelung 9 und/oder der Außenschicht 11 liegt zwischen 0,5 und 4 mm. Der Griffkern 6 kann ein balliges Ende des Griffs bildende Kappe aufweisen, deren Durchmesser größer ist als der Durchmesser eines Schafts oder Mittenbereichs 26 des Griffkerns 6. Alternativ kann der Griffkern 6 keine ballige Kappe aufweisen und mit dem Schaft oder Mittenbereich 26 bis zum Ende des Griffs 1 einen durchgehenden konstanten Querschnitt aufweisen. Alternativ kann der Griffkern nicht bis zum Ende des Griffs 1 durchgehend ausgebildet sein.

Die in den Fig. 22 bis 24 dargestellte Ausführungsform eines Griffs findet Einsatz für eine Kelle 46. Der Griff 1 besitzt gemäß dem in Fig. 23 dargestellten Längsschnitt einen vorderen Endbereich 47, einen Mittenbereich 26 und einen hinteren Endbereich 48. Die Endbereiche 47, 48 sind jeweils von radialen Erweiterungen des Griffkerns 6 gebildet. Der Mittenbereich 26 ist entsprechend den zuvor dargestellten Ausführungsformen mit einer Griffkernummantelung 9, einer weichen Schicht 10 (innere Schicht 28) aus dem zweiten Material 23 und einer Außenschicht 11 (äußere Schicht 27) aus dem ersten Material 22 gebildet, wobei für die dargestellte Ausführungsform Außenschicht 11 und Griffkernummantelung 9 im Übergangsbereich zu den Endbereichen 47, 48 durch Stege 42 oder jeweils eine bundartige stirnseitige Schicht miteinander stoffschlüssig verbunden sind, so dass die weiche Schicht 10 vollständig von einer Schicht aus dem härteren Material 22 ummantelt ist. Die Griffkernummantelung 9, die weiche Schicht 10 und die Außenschicht 11 sind durch Einspritzen der Materialien 22, 23 in einem Sandwichverfahren hergestellt. Aus dem in Fig. 24 dargestellten Querschnitt des Griffs 1 ist ersichtlich, dass dieser unsymmetrisch zu einer quer zur Längsachse 3-3 orientierten Querachse 49-49 ist. Natürlich kann der Griff auch eine symmetrische Form haben.

Wie die Fig. 18-26 zeigen, gibt es im Inneren der Griffe 1 nicht zwingend durchgehende steg- oder rippenartige Verbindungen zwischen der Griffkernummantelung 9 und der Außenschicht 11 aus Material 22, da sich eine solche stegartige Verbindung nicht automatisch in jedem Fall beim Sandwichverfahren ergibt.

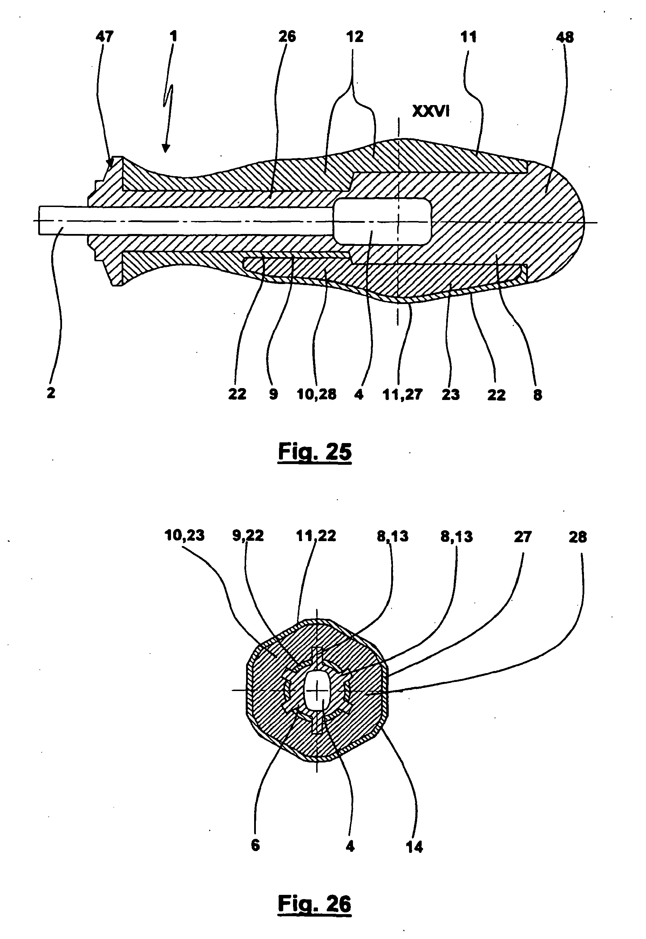

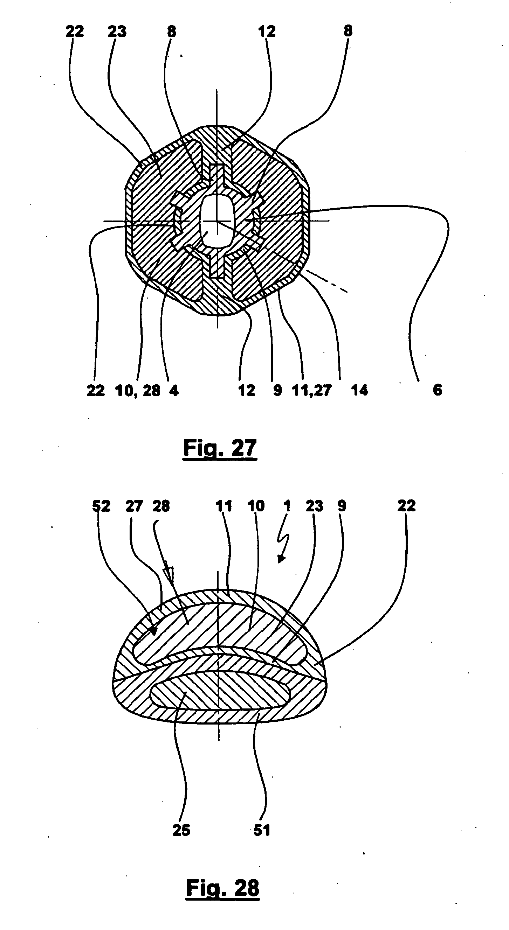

Für das in Fig. 25 und 26 dargestellte Ausführungsbeispiel sind in der Darstellung der unteren Halbebene Rippen 8, 13 des Griffkerns 6 vorgesehen, die die Griffkernummantelung 9 in beide radialen Richtungen durchsetzen und sich in einen Teilbereich der weichen Schicht 10 (innere Schicht 27) erstrecken, wie dies aus Fig. 26 ersichtlich ist. Hierbei sind sechs Rippen 8, 13 gleichmäßig in Umfangsrichtung verteilt, wobei zwei gegenüberliegende Rippen 8, 13 mit gegenüber den weiteren Rippen 8, 13 vergrößerter radialer Erstreckung ausgebildet sind. Es können aber auch alle Rippen dieselbe radiale Erstreckung haben. Im Unterschied zu dem Beispiel gemäß Fig. 10, 11 erstrecken sich die Rippen nicht weit in die Schicht 10, so dass die Torsionssteifigkeit geringer ist als bei einem Griff gemäß Fig. 10 und 11. Bei entsprechender Anlage der Form und der Einspritzkanäle sowie Steuerung des Ablaufes werden sich bei Herstellung des dargestellten Griffs 1 im Intervall - Sandwichverfahren jedoch Stege 12 zwischen dem Griffkern 6, bzw. dessen Griffkernummantelung 9, und der Außenschicht 11 ausbilden, die in axialer Richtung über die Erstreckung der Schicht 10 verlaufen, wie aus Fig.27 und der oberen Halbebene in Fig.25 ersichtlich ist.

Fig. 28 zeigt eine Ausführungsform eines Griffs 1 für einen Zangenschenkel 25, siehe auch Fig. 7, 8, 9. Ein Unterteil 51, in dem der Zangenschenkel 25 aufgenommen ist, ist mit einem Hartkunststoff ummantelt. Mit dem Unterteil 51 stoffschlüssig auf der außenliegenden Seite des Zangenschenkels 25 verbunden ist ein Oberteil 52, wobei bei dieser Verbindung das Unterteil 51 mit dem Griffkern 6 der Ausführungsbeispiele für Schraubendreher vergleichbar ist. Das Oberteil 52 ist mit einer weichen Schicht 10 oder inneren Schicht 28 gebildet, die im Querschnitt vollständig von der einer Außenschicht 11 oder äußeren Schicht sowie einer "Griffkernummantelung" 9, die ineinander übergehen, umgeben ist. Eine Herstellung des Griffes 1, bestehend aus dem Oberteil 52 in Verbund mit dem Unterteil 51, ist sowohl als eigenes Teil zur nachträglichen Montage auf den Zangenschenkel 25 als auch durch direktes Aufspritzen auf den Zangenschenkel 25 in einem Sandwichverfahren möglich, vergleichbar mit dem Aufspritzen der Schichten 10 und 11 auf den Griffkern 6 eines Schraubendrehers.

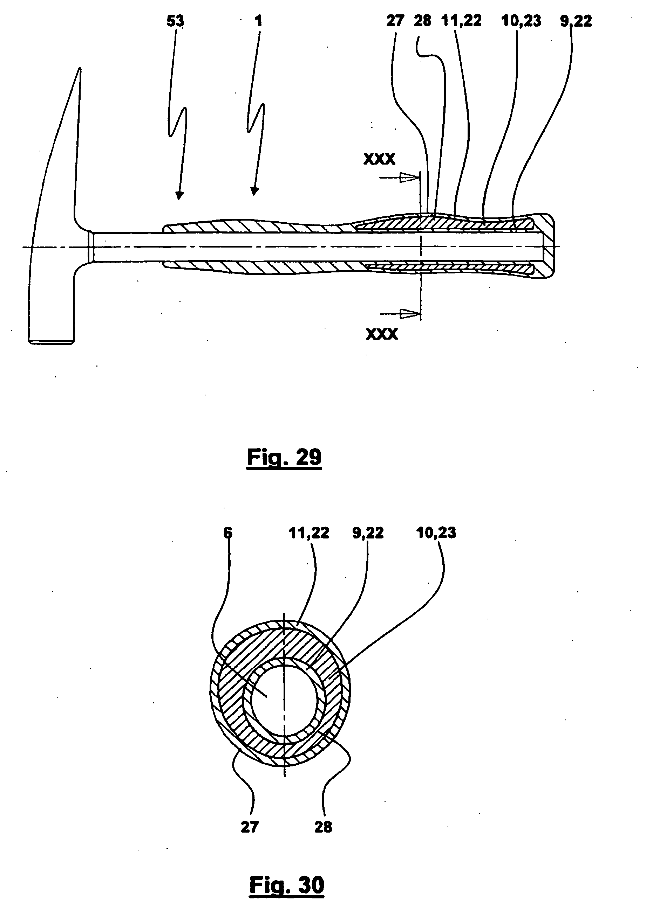

Fig. 29, 30 zeigen einen Hammer 53 mit einer Ausführungsform eines Griffs 1 im Längsschnitt und Querschnitt. Zumindest in dem Bereich des Griffes, der von dem Benutzer von der Hand umfasst wird, ist der Griff 1 mit einer Griffkernummantelung 9, einer weichen Schicht 10 (innere Schicht 27) und einer Außenschicht 11 (äußere Schicht 28) gebildet, die in einem Sandwichverfahren hergestellt sein können. Abweichend zu der dargestellten Ausführungsform kann ein Hammerstiel auch mit einem dicht in einer Kavität anliegenden Endstück ähnlich einer Kappe 18 bei einem Griff für Schraubendreher ausgestattet sein.

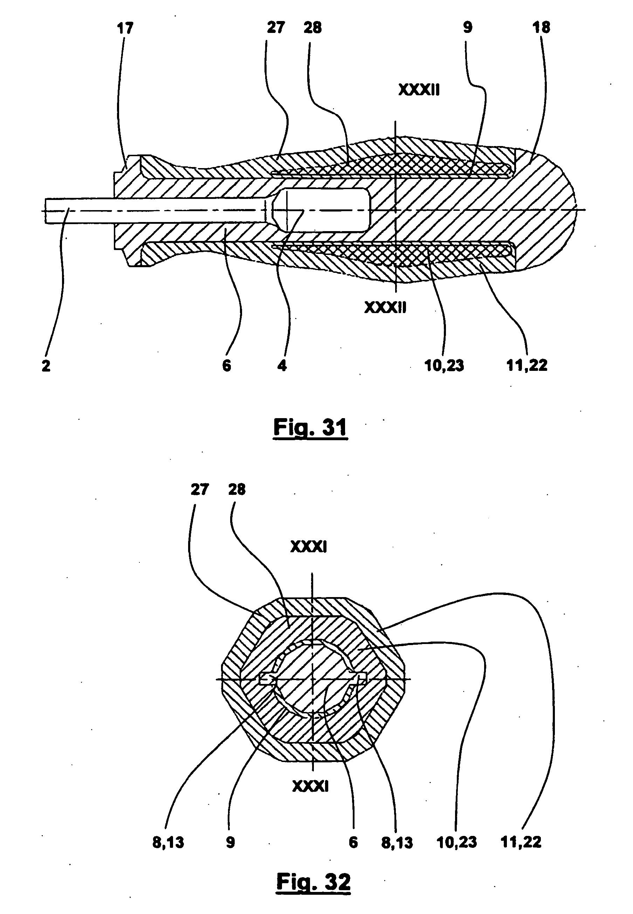

Das in den Fig. 31 und 32 dargestellte Ausführungsbeispiel ist ohne Griffkernummantelung 9 aus einem harten Kunststoff hergestellt. Stattdessen ist der Griffkern 6 mit den zugeordneten, gegenüberliegenden beiden Rippen 8, 13 unmittelbar oder mittelbar unter Zwischenschaltung der Griffkernummantelung 9 mit einer weichen Schicht 10 (innere Schicht 28) ummantelt, die für eine Herstellung in einem Sandwichverfahren mit einem zweiten Material 23 gebildet ist. Die weiche Schicht 10 ist radial außenliegend von der Außenschicht 11 (äußere Schicht 27) ummantelt, die für eine Fertigung in dem Sandwichverfahren mit dem ersten Material 22 gebildet ist. Die Dicke der Außenschicht 11 ist bei dieser Ausgestaltung durch entsprechende Dosierung der in die Formkavität eingespritzen Volumina der Materialien 22 und 23 und stärkerer Kühlung der Wand der Formkavität, vorzugsweise, je nach Griffgröße, im Bereich zwischen 2 und 4 mm eingestellt. Die Verbindung der Schichten 27, 28 erhält dadurch bereits eine gute Torsionssteifigkeit, auch wenn die Rippen 8,13 nicht weit in die weiche Schicht 10 hineinragen. Eine weitere Verbesserung der Torsionssteifigkeit wird durch Verlängerung der Rippen 8 bis ungefähr zur Innenseite der Außenschicht 11 (äußere Schicht 27) erreicht. Im Extremfall schließen die Rippen stoffschlüssig an die äußere Schicht 27 an, s. Fig. 15, 16. Eine Erhöhung der Torsionssteifigkeit kann auch dadurch herbeigeführt werden, dass der Griffkern 6 selbst eine ungefähr rechteckigen Querschnitt hat und stoffschlüssig an die Innenseite der Außenschicht 11 anschließt, s. Fig. 17.

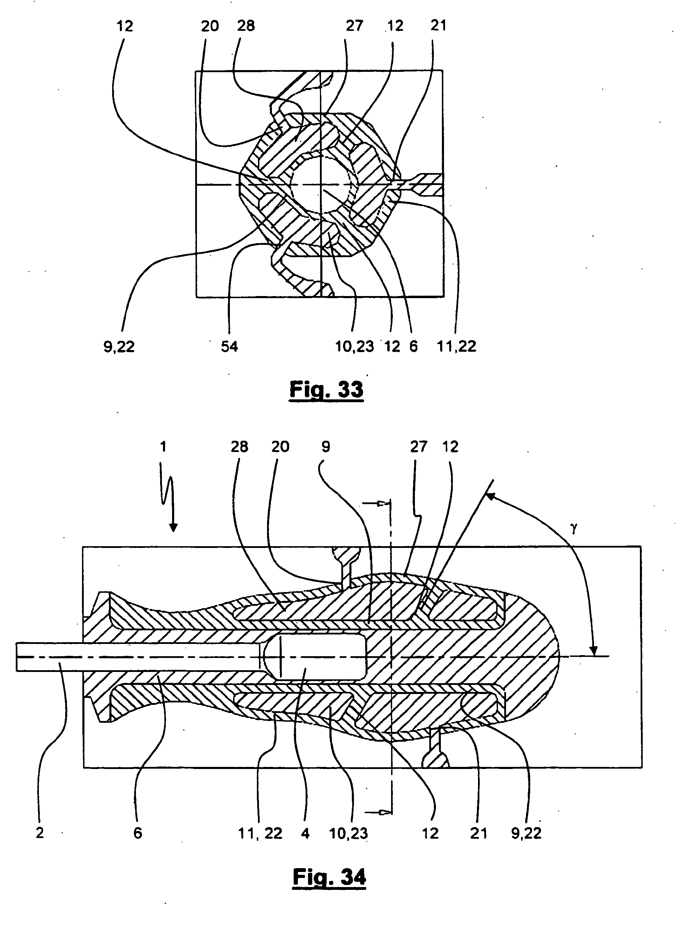

Fig. 33 zeigt eine Ausführungsform des Verfahrens, bei dem drei Eintrittsöffnungen 20, 21, 54 in Umfangsrichtung gleichmäßig verteilt ungefähr bei gleicher axialer Position angeordnet sind. Auf diese Weise können in Umfangsrichtung mittig zwischen den Eintrittsöffnungen 20, 21, 54 drei Rippen 12 hergestellt werden, die sich in axial und radial orientierten Ebenen erstrecken.

Fig. 34 zeigt eine Ausführungsform des Verfahrens, bei dem zwei Eintrittsöffnungen 20, 21 auf dem Umfang einander gegenüberliegend angeordnet sind, aber in axialer Richtung zueinander versetzt angeordnet sind. In diesem Fall stellt sich bei dem beschriebenen Sandwichverfahren eine Rippe 12 ein, die in Umfangsrichtung geschlossen oder in Form einer um die Längsachse 3-3 umlaufenden Spirale ausgebildet ist und die Schichten 9 und 11 verbindet. Sind die Eintrittsöffnungen 20, 21 abweichend zu der dargestellten Ausführungsform in Umfangsrichtung nicht zueinander versetzt, erstreckt sich die sich ergebende Rippe 12 in einer quer zur Längsachse liegenden Ebene, während sich für die dargestellte Ausführungsform ein Steigungswinkel γ der Spirale gegenüber der Längsachse 3-3 ergibt. Über die Einspritzbedingungen und die Orte der Einspritzöffnungen 20, 21 kann die der Steigungswinkel γ der Spirale vorgegeben werden.

Vorzugsweise betrifft die Erfindung nicht nur Griffe für verschieden Werkzeuge, sondern auch einen oder mehrere Griffe für Werkzeugsätze in unterschiedlichen Größen und Schaftformen.

Für Griffe für Schraubendreher wird eine nicht poröse Ausführung der Schichten bevorzugt. Das Verfahren kann zur Herstellung von Griffen mit symmetrischen Querschnittsformen, wie Schraubendrehergriffe, aber auch für Griffe mit unsymmetrischen Querschnittsformen, wie Kellengriffe oder Hämmergriffe gemäß EP 1144 165 B1 und EP 11 63 088 B1 der Anmelderin angewendet werden. Für eine Ausgestaltung ist kennzeichnend für Griffe, die nach diesem Verfahren hergestellt werden, dass die Querschnittsfläche des Griffkerns aus hartem Kunststoff im Verhältnis zur Querschnittsfläche des fertigen Griffes verhältnismäßig klein ist, wodurch erreicht wird, dass das Volumen der elastischen, weichen Schichten verhältnismäßig groß werden kann. Hierdurch unterscheiden diese Griffe sich von den 2-Komponenten-Griffen nach dem Stand der Technik, bei denen die Querschnittsfläche des Griffkerns aus hartem Kunststoff verhältnismäßig groß ist im Vergleich zur Querschnittsfläche des Griffmantels aus einem weicheren Kunststoff.

### B. VERFAHREN

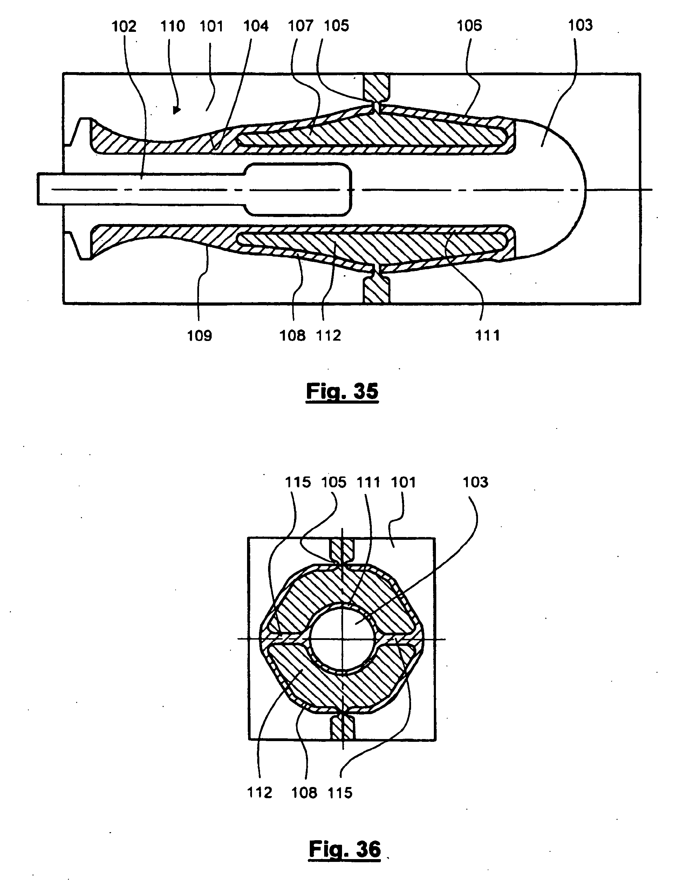

Sämtliche vorgenannten Griffe können - auch abweichend oder ergänzend zu den zuvor erläuterten Verfahren und mit abweichenden oder entsprechenden Merkmalen des Griffes und deren Bestandteile vor, während und nach dem Aushärten der Schichten - mit folgenden Verfahrensschritten hergestellt werden:
Gemäß Fig. 35 und 36 wird in eine erste Form 101 ein Schaft 102 eingelegt, der mit einem Griffkern 103 aus einem Hartkunststoff ummantelt ist. Die Form 101 besitzt eine Kavität 104, in die über mindestens eine Eintrittsöffnung 105 zunächst ein erstes Material 106 eingespritzt wird. Anschließend wird vor einem endgültigen Aushärten des ersten Materials 106, vorzugsweise über dieselbe Eintrittsöffnung 105, ein zweites Material 107 in das Innere des ersten Materials 106 eingespritzt, welches das erste Material 106 verdrängt, bis dieses radial außenliegend zur Anlage an die die Kavität 104 begrenzende Wandung der Form 101 sowie radial innenliegend zu Anlage an den Griffkern 103 kommt. Mit vollständigem Befüllen der Kavität wird das Einspritzen des zweiten Materials 107 beendet. Möglich ist allerdings auch eine Beendigung des Befüllens zu einem früheren Zeitpunkt, zu dem ein Teil der Kavität 104 noch nicht ausgefüllt ist.

Das erste Material 106 bildet radial außenliegend eine äußere Schicht 108, welche eine Mantelfläche 109 des Griffes 110 bereitstellt, sowie eine den Griffkern 103 ummantelnde Griffkernummantelung 111. Über einen Teil der Längserstreckung des Griffes 110, vorzugsweise auch in dem Bereich des Griffes 110 mit dem größten Durchmesser, ist zwischen der äußeren Schicht 108 und der Griffkernummantelung 111 die mit dem zweiten Material 107 gebildet innere Schicht 112 angeordnet und stoffschlüssig angebunden.

Das zweite Material 107 für die Ausbildung der inneren Schicht ist für dieses Verfahren mit einem Treibmittel versehen. Für den Fall, dass mit Beendigung des Einspritzens des zweiten Materiales 107 die Kavität 104 noch nicht vollständig ausgefüllt ist, kann das Material mit einem Aufschäumen infolge des Treibmittels die Form vollständig ausfüllen, wobei Luft über eine geeignete Entlüftungsbohrung verdrängt werden kann.

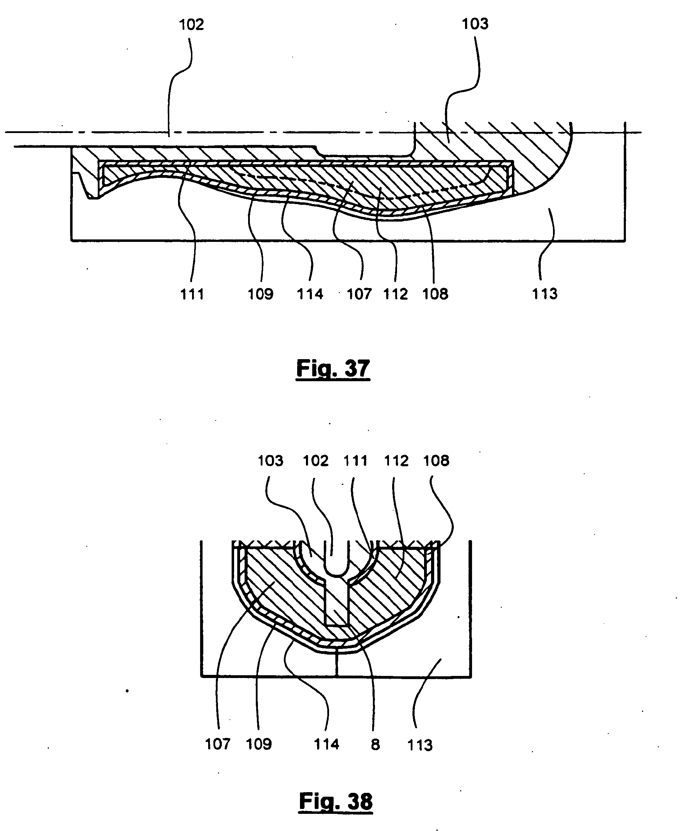

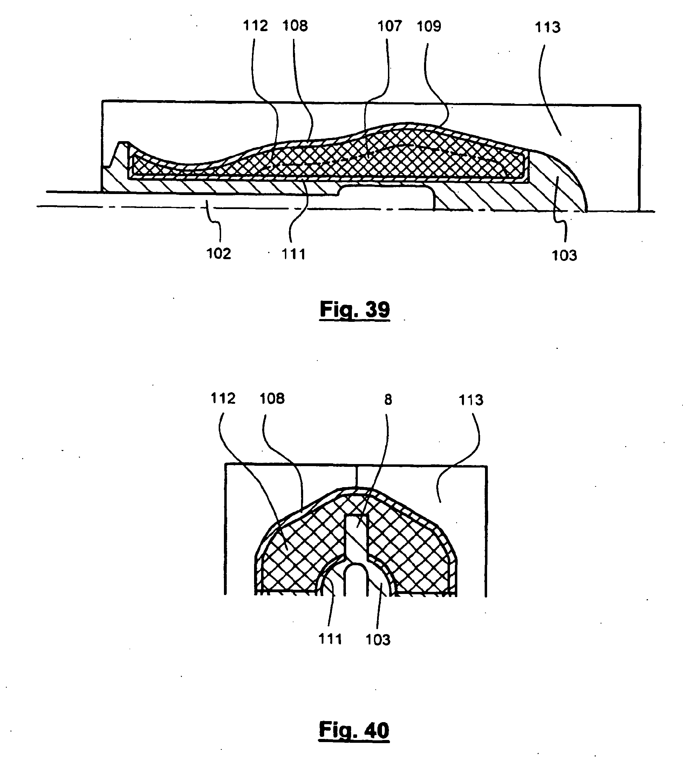

Gemäß Fig. 37 und Fig. 38 wird der Griff 110 vor dem Aushärten der inneren Schicht 112 und der Beendigung der Wirkung eines Treibmittels in der inneren Schicht 112 aus der ersten Form 101 entnommen und in eine zweite Form 113 eingelegt, wobei der Durchmesser der Kavität der zweiten Form 113 größer ist als der entsprechende Durchmesser der ersten Form 101. Demgemäß ergibt sich zwischen der Mantelfläche 109 und der zweiten Form 113 ein freier, um die Mantelfläche 109 umlaufender Zwischenraum 114. Infolge der Wirkung des Treibmittels vergrößert sich das Volumen des zweiten Materials 107, was mit einer Vergrößerung der Schichtdicke der inneren Schicht 112 und der Ausbildung von Poren oder der Vergrößerung von Poren einhergeht. Infolge dieser Veränderung wird der Durchmesser der äußeren Schicht 108 vergrößert, vorzugsweise durch plastische und/oder elastische Verformung der äußeren Schicht 108. Schließlich kommt die äußere Schicht unter Ausbildung einer Anpresskraft zur Anlage an die zweite Form 113. Mit dem durch die zweite Form 113 vorgegebenen Durchmesser für die Mantelfläche 109 erfolgt das endgültige Aushärten (Fig. 39, 40).

Bei dem ersten Material 106 und dem zweiten Material 107 kann es sich um gleiche oder unterschiedliche Werkstoffe handeln, wobei das zweite Material 107 zumindest einen größeren Anteil eines Treibmittels besitzt oder nur dieses mit einem Treibmittel versehen ist.

Der gewünschte elastische Effekt eines Griffes kann durch eine poröse Struktur erreicht werden durch Zusatz von Treibmittel zu dem Material einer inneren Schicht. Eine Nutzung des Treibmittels zur Erzeugung einer elastischen, porösen Struktur lässt sich aber nicht erzielen, wenn der Griff so lange in der Form verbleibt, dass das Material so weit abgekühlt ist, dass die Form des Griffes nach dem Entformen stabil bleibt. Eine poröse Struktur kann sich aber bilden, wenn die Griffe früher aus der Form genommen werden und das Material der inneren Schicht noch eine Temperatur hat, bei der Treibmittel noch wirksam ist oder werden kann, indem dieses vergast unter Ausbildung von mit Gas gefüllten Poren, und die äußere Schicht noch so elastisch ist, dass sie unter dem Innendruck nachgibt und der Griff expandieren kann.

Wenn das Verfahren bzw. eine entsprechender Abkühlprozess mit dem Intervall-Sandwich-Spritzgießverfahren gekoppelt wird, hat dies die Vorteile, dass
- für die innere und äußere Schicht verschiedene Materialien ausgewählt werden können, wobei für die äußerer Schicht ein Material mit höherer Härte verwendet wird als für die innerer Schicht, so dass die äußere Schicht weniger leicht beschädigt werden kann,
- die Dicken der äußeren und inneren Schicht durch die Dosiermengen des eingespritzten Materials genau vorgegeben werden können.

Dabei entwickeln sich die Eigenschaften des Griffes gegenläufig: um eine dickere äußere Schicht zu erzielen, muss der Griff längere Zeit in der Form bleiben. Der Griff kühlt dann stärker ab und nach dem Entformen ist die Wirkung des Treibmittels geringer - und umgekehrt.

Die Expansion der inneren Schicht kann nach dem Entnehmen aus der Form entweder frei erfolgen oder - wie zuvor beschrieben - dadurch begrenzt werden, dass die Griffe nach dem Entnehmen aus der ersten Form in eine zweite Form eingelegt werden, die eine größerer Kavität aufweist als die erste Form. Diese größere Kavität wird durch die Griffe beim Expandieren ausgefüllt. Auf diese Weise kann die Expansion so begrenzt werden, dass der vollständig ausgehärtete Griff eine vorgegebene Form hat und auch die Übergänge zu dem frei liegenden Teile des Griffkernes kontinuierlich verlaufen. Bei freier Expansion kann sich die Kontur des Griffes verändern, weil die Expansion im Bereich größerer Wanddicke der inneren Schicht stärker sein wird als im Bereich geringerer Wanddicke.

Die radiale Vergrößerung des Griffes durch die Expansion kann vorgegeben werden durch
- die Menge des Treibmittels - viel Treibmittel ergibt mehr und größere Poren und damit eine stärkere Expansion,
- den Zeitpunkt der Übergabe aus der ersten in die zweite Form - eine Übergabe bei höherer Temperatur verstärkt die Wirkung des Treibmittels,
- die Art des verwendeten Materials. Die verschiedenen in Betracht kommenden Materialien reagieren unterschiedlich auf ein Treibmittel, auch die ursprüngliche Härte des Materials wird Einfluss auf die Expansion haben, und/oder
- die Größe der Kavität in der zweiten Form, sofern diese eingesetzt wird.

Für die elastischen Griffe aller Ausführungsarten und Herstellungsverfahren könnte eine Kenngröße allgemein vorgegeben werden - die Shore-Härte, gemessen auf der Oberfläche des Griffes. Die angestrebte Verformbarkeit des Griffes könnte durch die Angabe der Shore-Härte, gemessen auf der Oberfläche des Griffes an der Stelle des größten Durchmessers bei Raumtemperatur von ca. 20 °C, bspw. 20 bis 45 Shore A, vorzugsweise 25 bis 35 Shore A oder mit den zuvor definierten Härten, definiert werden.

Ein Einsatz des Verfahrens ist für sämtliche unter A. angesprochene Ausführungsformen des Griffes möglich, wobei auch sämtliche in A. genannten Verfahrensmerkmale und/oder Vorrichtungsmerkmale mit den unter B. offenbarten Merkmalen kombiniert werden können. Beispielweise kann die Griffkernummantelung 111 über Rippen 8, 115 mit der äußeren Schicht 108 verbunden sein, was insbesondere vorteilhaft ist, wenn über den Griff 110 Torsionsmomente zwischen dem Benutzer und dem Schaft 102 übertragen werden sollen. ebenfalls möglich ist, dass in die innere Schicht 112 hineinragende Stege für eine gute Übertragung eines Torsionsmomentes sorgen.

Fig. 35, 36 zeigen eine Ausführungsform, bei welcher der Griffkern 103 keine Rippen 8 besitzt, während in Fig. 37-40 eine Ausführungsform dargestellt ist, die über Rippen 8 des Griffkerns 103 verfügt.

Eine Entnahme des Griffs aus der ersten Form oder eine Öffnung der Form erfolgt nach dem Einspritzen des ersten und zweiten Materials beispielsweise nach einer Zeitspanne von 6-20 Sekunden. Diese Zeitspanne ist abhängig von der Größe, insbesondere dem Durchmesser, des jeweiligen Griffs. Eine gewisse Kühlzeit vor einem Öffnen bzw. einer Entnahme muss eingehalten werden, damit der Griff bei der Entnahme eine ausreichende Formstabilität hat.

### BEZUGSZEICHENLISTE

| | | | |
|---|---|---|---|
| 1 | Griff | 33 | Radius Griffkern |
| 2 | Schaft | 34 | Radius Mantelfläche |
| 3 | Längsachse | 40 | radiale Erstreckung |
| 4 | Übertragungsquerschnitt Schaft | 41 | radiale Erstreckung |
| 5 | Rippen | 42 | Steg, Bund |
| 6 | Griffkern | 43 | Endbereich |
| 7 | Übertragungsquerschnitt Griffkern | 44 | Nase |
| 8 | Rippen Griffkern | 45 | Nut |
| 9 | Griffkernummantelung | 46 | Kelle |
| 10 | weiche Schicht | 47 | vorderer Endbereich |
| 11 | Außenschicht | 48 | hinterer Endbereich |
| 12 | Rippen oder Stege | 49 | Querachse |
| 13 | Rippen | 50 | Zange |
| 14 | Mantelfläche | 51 | Unterteil |
| 15 | Auge | 52 | Oberteil |
| 16 | Form, Formkavität | 53 | Hammer |
| 17 | Endbereich | 54 | Eintrittsöffnung |
| 18 | Endbereich | 101 | erste Form |
| 19 | Kammer | 102 | Schaft |
| 20 | Eintrittsöffnung | 103 | Griffkern |
| 21 | Eintrittsöffnung | 104 | Kavität |
| 22 | erstes Material | 105 | Eintrittsöffnung |
| 23 | zweites Material | 106 | erstes Material |
| 24 | Kanal | 107 | zweites Material |
| 25 | Zangenschenkel | 108 | äußere Schicht |
| 26 | Mittenbereich | 109 | Mantelfläche |
| 27 | äußere Schicht | 110 | Griff |
| 28 | innere Schicht | 111 | Griffkernummantelung |
| 29 | Längserstreckung | 112 | innere Schicht |
| 30 | Erstreckung Rippe/rechteckiger Übertragungsquerschnitt | 113 | zweite Form |
| | | 114 | Zwischenraum |
| | | 115 | Rippe |

## Patentansprüche

1. Verfahren zur Herstellung eines Griffs (110) für ein ein Torsionsmoment übertragendes Werkzeug, insbesondere einen Griff eines Schraubendrehers, mit einem Schaft (2), einem Griffkern (103) aus einem harten Material, einer äußeren Schicht (108) und einer innenliegend von der äußeren Schicht (108) und sich radial an die äußere Schicht (108) anschließenden inneren Schicht (112), die weicher ist als die äußere Schicht (108), wobei die Schichtdicken und das Material oder die Materialien der Schichten (108;112) derart gewählt sind, dass bei einer Beaufschlagung des Griffes (110) durch die Kraft einer Hand eines Benutzers eine elastische Verformung sowohl der äußeren Schicht (108) als auch der inneren Schicht (112) erfolgt, mit folgenden Verfahrensschritten:
a) der Schaft (2) wird in einer Spritzgießform in den Griffkern (103) eingegossen,
b) der mit dem ausgehärteten Griffkern (103) ummantelte Schaft (2) wird in eine erste Form (101) eingelegt,
c) in die erste Form (101) wird zunächst ein erstes Material (106) eingespritzt, welches später die äußere Schicht (108) bildet,
d) ein zweites, später die innere Schicht (112) bildendes Material (107) wird mit einem Treibmittel versehen,
e) anschließend an das Einspritzen des ersten Materials (106) und vor einem endgültigen Aushärten des ersten Materials (106) wird in die erste Form (101) das zweite Material (107) in das noch flüssige erste Material (106) eingespritzt, wobei
ea) mit dem Einspritzen des zweiten Materials (107) erstes Material (106) räumlich verdrängt wird und zur Anlage an die Wandung der ersten Form (101) kommt und
eb) das erste Material die äußere Schicht (108) bildet, die die innere Schicht (112) vollständig ummantelt,
f) vor einem Aushärten zumindest eines Teilbereiches des zweiten Materials (107) wird
fa) die erste Form (101) geöffnet oder
fb) der Griff (110) aus der ersten Form (101) entfernt und in eine zweite Form (113) eingelegt, deren Kavität zumindest teilweise einen größeren Durchmesser aufweist als die erste Form (101), in die das erste und zweite Material (106, 107) eingespritzt wird,
so dass eine Expansion des aufschäumenden zweiten Materials (107) möglich ist, die zu einer plastischen und/oder elastischen Verformung der äußeren Schicht (108) führt.

2. Verfahren nach einem der vorhergehenden Ansprüche, wobei die Durchmesseränderung des Griffes (110) von dem Durchmesser der Kavität der Form (101), in die die Materialien (106, 107) eingespritzt werden, zu dem Durchmesser des Griffes (110) nach dem Aushärten und Abkühlen vorgegeben wird durch
- den Anteil des Treibmittels in dem zweiten Material (107),
- den Zeitpunkt der Öffnung der Form, in die das erste Material (106) und/oder das zweite Material (107) eingespritzt wird oder der Entnahme des Griffes (110) aus dieser Form (101) und/oder
- die Wahl des Materials für das erste und zweite Material (106, 107).

3. Verfahren nach einem der vorhergehenden Ansprüche, wobei eine Verformbarkeit des hergestellten Griffes (110) erzeugt wird durch Einsatz einer Härte auf der Oberfläche des Griffes, gemessen an der Stelle des größten Durchmessers des Griffes, bei einer Raumtemperatur von 20° von ca. 20 bis 45 Shore A, vorzugsweise 25 bis 35 Shore A.

4. Verfahren nach einem der vorhergehenden Ansprüche, wobei als zweites Material (107) ein Kunststoff mit einer Härte von 10 bis 55 Shore A, 20 bis 65 Shore A, 25 bis 55 Shore A oder 15 bis 65 Shore A eingesetzt wird.

5. Verfahren nach einem der vorhergehenden Ansprüche, wobei, als erstes Material ein Kunststoff Einsatz findet mit einer Härte zwischen 30 und 105 Shore A, vorzugsweise zwischen 30 bis 85 Shore A.

6. Verfahren nach einem der vorhergehenden Ansprüche, wobei der Griffkern aus einem Hartkunststoff mit einer Kugeldruckhärte von 45 - 65 N/mm² hergestellt wird.

7. Verfahren nach einem der vorhergehenden Ansprüche, wobei die innere Schicht zumindest in einem Teilumfangsbereich einer maximalen radialen Erstreckung des Griffs eine radiale Erstreckung im Bereich von 3,5 mm, 4 mm, 6mm oder 8 mm besitzt, während die minimale radiale Erstreckung zwischen 0,5 mm und 3 mm, insbesondere zwischen 1 mm und 2,5 mm liegt oder kleiner ist als 1,5 mm, 2mm oder 2,5 mm.

8. Verfahren nach einem der vorhergehenden Ansprüche, wobei die äußere Schicht eine Schichtdicke von 0,5 mm bis 2,5 mm besitzt.

## Claims

1. Method for manufacturing a handle (110) for a tool transmitting a torsional moment, in particular a handle for a screw driver, with a shank (2), a core (103) of the handle made of a hard material, an outer layer (108), and an inner layer (112) which is located inside of the outer layer (108) and which is located radially adjacent to the outer layer (108), wherein the inner layer (112) is softer than the outer layer (108), wherein the thicknesses of the layers and the material or the materials of the layers (108; 112) are chosen such that with a bias of the handle (110) by the force of a hand of a user both the outer layer (108) and the inner layer (112) are elastically deformed, the method comprises the following steps:
a) molding or integrally casting the shank (2) in the core (103) of the handle in an injection molding die,
b) insertion of the shank (2) covered by the hardened core (103) of the handle into a first die (101),
c) first injecting a first material (106) into the first die (101), wherein the first material (106) later builds the outer layer (108),
d) adding a blowing agent to a second material (107) which later builds the inner layer (112),
e) subsequent to injecting the first material (106) and before a final or complete hardening of the first material (106) injecting the second material (107) into the first die (101) into the still liquid first material (106), wherein
ea) with the injection of the second material (107) first material (106) is spatially pushed aside, wherein the first material (106) comes into contact with the wall of the first die (101), and
eb) the first material builds the outer layer (108) which completely covers the inner layer (112),
f) before at least a part of the second material (107) has hardened
fa) the first die (101) is opened or
fb) the handle (110) is removed from the first die (101) and inserted into a second die (113), wherein a cavity of the second die (113) comprises at least partially a larger diameter than the fist die (101) into which the first and the second material (106, 107) are injected, such that an expansion of the foaming second material (107) is possible, wherein the expansion leads to a plastic and/or elastic deformation of the outer layer (108).

2. Method of claim 1, wherein the change of the diameter of the handle (110) from the diameter of the cavity of the die (101) into which the materials (106, 107) are injected to the diameter of the handle (110) after the hardening and cooling is determined by
- the percentage or portion of the blowing in the second material (107),
- the point in time for opening the die into which the first material (106) and/or the second material (107) are injected or the point in time of the removal of the handle (110) from this die (101) and/or
- the choice of the material for the first and the second material (106, 107).

3. Method of claim 1 or 2, wherein a deformability of the manufactured handle (110) is produced by use of a hardness of the outer surface of the handle, measured at the point of the largest diameter of the handle at room temperature of 20° of approximately 20 to 45 Shore A, in particular 25 to 35 Shore A.

4. Method of one of claims 1 to 3, wherein as a second material (107) a plastic material with a hardness of 10 to 55 Shore A, 20 to 65 Shore A, 25 to 55 Shore A or 15 to 65 Shore A is used.

5. Method of one of claims 1 to 4, wherein as a first material a plastic material is used with a hardness between 30 and 105 Shore A, in particular between 30 to 85 Shore A.

6. Method of one of claims 1 to 5, wherein the handle is made of a hard plastic material having a ball indentation hardness of 45 - 65 N/mm².

7. Method of one of claims 1 to 6, wherein the inner layer at least in a part of its circumference at a maximum of the radial extension of the handle comprises a radial extension in the range of 3.5 mm, 4 mm, 6 mm or 8 mm, whereas the minimal extension is between 0.5 mm and 3 mm, in particular between 1 mm and 2.5 mm, or smaller than 1.5 mm, 2 mm or 2,5 mm.

8. Method of one of claims 1 to 7, wherein the outer layer has a thickness of 0.5 mm to 2.5 mm.

## Revendications

1. Procédé de fabrication d'une poignée (110) pour un outil transmettant un couple de torsion, plus particulièrement une poignée de tournevis, avec un axe (2), un noyau de poignée (103) constitué d'un matériau dur, une couche externe (108) et une couche interne (112) reliée radialement à la couche externe (108) et qui est plus molle que la couche externe (108), les épaisseurs des couches et le matériau ou les matériaux des couches (108 ; 112) étant choisies de telle sorte que, lors de la sollicitation de la poignée (110) par la force d'une main d'un utilisateur, une déformation élastique aussi bien de la couche externe (108) que de la couche interne (112) ait lieu, avec les étapes de procédé suivantes :
a) l'axe (2) est coulé dans un moule à injection dans le noyau de poignée (103),
b) l'axe (2) revêtu du noyau de poignée (103) durci est introduit dans un premier moule (101),
c) dans le premier moule (101), un premier matériau (106) est d'abord injecté, qui constituera plus tard la couche externe (108),
d) un deuxième matériau (107) qui constituera plus tard la couche interne (112), est muni d'un agent moussant,
e) après l'injection du premier matériau (106) et avant le durcissement définitif du premier matériau (106), le deuxième matériau (107) est injecté dans le premier matériau (106) encore liquide dans le premier moule (101),
ea) le premier matériau (106) étant comprimé par l'injection du deuxième matériau (107) et s'appuie contre les parois du premier moule (101), et
eb) le premier matériau constituant la couche externe (108) qui englobe entièrement la couche interne (112),
f) avant un durcissement d'au moins une partie du deuxième matériau (107),
fa) le premier moule (101) est ouvert ou
fb) la poignée (110) est retirée du premier moule (101) et introduit dans un deuxième moule (113) dont la cavité présente au moins partiellement un diamètre supérieur à celui du premier moule (101), dans lequel sont injectés le premier et le deuxième matériaux (106, 107),
de façon à ce qu'une expansion du deuxième matériau (107) moussant, qui provoque une déformation plastique et/ou élastique de la couche externe (108), soit possible.

2. Procédé selon l'une des revendications précédentes, la variation de diamètre de la poignée (110) du diamètre de la cavité du moule (101), dans lequel sont injectés les matériaux (106, 107), au diamètre de la poignée (110) après le durcissement et le refroidissement, étant prédéterminée par
- la proportion d'agent moussant dans le deuxième matériau (107),
- le moment de l'ouverture du moule dans lequel le premier matériau (106) et/ou le deuxième matériau (107) sont injectés ou le moment du retrait de la poignée (110) hors de ce moule (101) et/ou
- le choix du matériau pour le premier ou le deuxième matériau (106, 107).

3. Procédé selon l'une des revendications précédentes, la déformabilité de la poignée (110) fabriquée étant produite par l'utilisation d'une dureté à la surface de la poignée, mesurée à l'endroit du diamètre le plus important de la poignée, à une température ambiante de 20°, d'environ 20 à 45 Shore A, de préférence 25 à 35 Shore A.

4. Procédé selon l'une des revendications précédentes, le deuxième matériau (107) étant une matière plastique avec une dureté de 10 à 55 Shore A, de 20 à 65 Shore A, de 25 à 55 Shore A ou de 15 à 65 Shore A.

5. Procédé selon l'une des revendications précédentes, le premier matériau étant une matière plastique avec une dureté entre 30 et 105 Shore A, de préférence entre 30 à 85 Shore A.

6. Procédé selon l'une des revendications précédentes, le noyau de la poignée étant constitué d'une matière plastique dure avec une dureté de pénétration de bille de 45 à 65 N/mm².

7. Procédé selon l'une des revendications précédentes, la couche interne présentant, au moins sur une zone périphérique partielle d'une extension radiale maximale de la poignée, une extension radiale de l'ordre de 3,5 mm, 4 mm, 6 mm ou 8 mm, tandis que l'extension radiale minimale est entre 0,5 mm et 3 mm, plus particulièrement entre 1 mm et 2,5 mm ou inférieure à 1,5 mm, 2 mm ou 2,5 mm.

8. Procédé selon l'une des revendications précédentes, la couche externe présentant une épaisseur de couche de 0,5 mm à 2,5 mm.
